(19) Europäisches Patentamt
European Patent Office
Office européen des brevets

(11) **EP 4 410 877 A1**

(12) **EUROPEAN PATENT APPLICATION**
published in accordance with Art. 153(4) EPC

(43) Date of publication:
**07.08.2024 Bulletin 2024/32**

(21) Application number: **22876090.6**

(22) Date of filing: **26.09.2022**

(51) International Patent Classification (IPC):
*C08J 9/16* [(2006.01)]   *B32B 5/32* [(2006.01)]
*B32B 27/32* [(2006.01)]   *B32B 27/40* [(2006.01)]
*C08L 23/10* [(2006.01)]   *C08L 23/26* [(2006.01)]

(52) Cooperative Patent Classification (CPC):
**B32B 5/32; B32B 27/32; B32B 27/40; C08J 9/16;
C08L 23/10; C08L 23/26**

(86) International application number:
**PCT/JP2022/035573**

(87) International publication number:
**WO 2023/054223 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2021 JP 2021159952**

(71) Applicant: **Kaneka Corporation
Osaka-shi, Osaka 530-8288 (JP)**

(72) Inventor: **NAKAYAMA, Kiyotaka
Settsu-shi, Osaka 566-0072 (JP)**

(74) Representative: **Hoffmann Eitle
Patent- und Rechtsanwälte PartmbB
Arabellastraße 30
81925 München (DE)**

(54) **POLYPROPYLENE-BASED RESIN EXTRUDED FOAM PARTICLES,
POLYPROPYLENE-BASED RESIN FOAM MOLDED BODY, AND LAMINATED FOAM BODY**

(57)     An object is to provide polypropylene-based resin extruded foamed particles from which a laminated expanded product obtained by laminating a polypropylene-based resin in-mold expanded product and polyurethane foam can be provided with good productivity.

Provided are polypropylene-based resin extruded foamed particles whose base resin contains, in respective specific amounts, a branched polypropylene-based resin (A) and an acid-modified polyolefin-based resin (B) that has a specific weight average molecular weight.

EP 4 410 877 A1

**Description**

Technical Field

The present invention relates to polypropylene-based resin extruded foamed particles, a polypropylene-based resin in-mold expanded product, and a laminated expanded product.

Background Art

A polypropylene-based resin in-mold expanded product obtained with use of polypropylene-based resin foamed particles has the characteristics of being excellent in, for example, the property of being formed in any shape, shock-absorbing properties, lightweight properties, and heat insulating properties. Therefore, a polypropylene-based resin in-mold expanded product has various uses such as heat insulating materials and shock-absorbing packing materials, in addition to automobile interior members and automobile bumper core materials that are main uses thereof. For example, a laminated expanded product which is obtained by laminating a polypropylene-based resin in-mold expanded product and polyurethane foam is used for automobile sheets, from the viewpoint of cushioning properties.

For example, Patent Literature 1 discloses an insert molding method for a pad that varies in hardness, in which method a pad that varies in hardness and that includes a polyethylene expanded product buried in a given part of a polyurethane expanded product is molded by placing the polyethylene expanded product in a mold and injecting an unexpanded raw material of polyurethane into the mold. The molding method in Patent Literature 1 is characterized in that a treatment for easy adhesion is carried out with respect to a surface of the polyethylene expanded product before the polyethylene expanded product is placed in the mold.

Patent document 2 discloses a production method for a laminated product in which a different-material layer made of a material different from that of a molded product obtained by integrally molding a plurality of foamable resin particles is formed on a surface of the molded product. The production method for a laminated product in Patent Literature 2 is characterized in that, when the different-material layer is formed, a region on the surface of the molded product which region is to be in contact with the different-material layer is heated at a temperature of not less than 80% of the softening temperature of the molded product.

Citation List

[Patent Literature]

    [Patent Literature 1]
    Japanese Patent Application Publication Tokukaihei No. 1-249312
    [Patent Literature 2]
    Japanese Patent Application Publication Tokukai No. 2012-171104

Summary of Invention

Technical Problem

However, the conventional technique as described above has room for further improvement, in terms of productivity.

An embodiment of the present invention has been made in view of the above problem, and an object thereof is to provide polypropylene-based resin extruded foamed particles from which a laminated expanded product including a polypropylene-based resin in-mold expanded product and polyurethane foam can be provided with good productivity.

Solution to Problem

Polypropylene-based resin extruded foamed particles in accordance with an embodiment of the present invention are configured such that a base resin of the polypropylene-based resin extruded foamed particles contains a polypropylene-based resin having a branched structure (A) in an amount of 70.0% by weight to 97.5% by weight and an acid-modified polyolefin-based resin (B) having a weight average molecular weight of 10,000 to 100,000 in an amount of 2.5% by weight to 30.0% by weight, in a case where a total of the branched polypropylene-based resin (A) and the acid-modified polyolefin-based resin (B) is regarded as 100% by weight.

Advantageous Effects of Invention

An embodiment of the present invention brings about an effect that it is possible to provide polypropylene-based resin extruded foamed particles from which a laminated expanded product including a polypropylene-based resin in-mold expanded product and polyurethane foam can be provided with good productivity.

Description of Embodiments

The following description will discuss embodiments of the present invention. The present invention is not, however, limited to these embodiments. The present invention is not limited to the configurations described below, but may be altered in various ways within the scope of the claims by a person skilled in the art. The present invention also encompasses, in its technical scope, any embodiment or example derived by combining technical means disclosed in differing embodiments or examples. Further, a new technical feature can be formed by combining the technical means disclosed in differing embodiments. All of the academic documents and patent literatures listed herein are incorporated by reference herein. Any numerical range expressed as "A to B" herein means "not less than A (inclusive of A and greater than A) and not more than B (inclusive of B and smaller than B)", unless otherwise stated.

[1. Technical idea on an embodiment of the present invention]

Products in each of which a polypropylene-based resin in-mold expanded product is used include many products each of which is obtained by adhering the polypropylene-based resin in-mold expanded product to polyurethane foam into a laminated expanded product. However, a polypropylene-based resin is a nonpolar resin, and, therefore, when the laminated expanded product is produced, it is difficult to adhere the polypropylene-based resin in-mold expanded product to the polyurethane foam. Thus, an improvement in adhesiveness of a polypropylene-based resin in-mold expanded product with respect to polyurethane foam is demanded.

As has been described, in Patent Literature 1, it is necessary to carry out the treatment for easy adhesion (for example, surface roughening treatment, flaming treatment, corona discharge treatment, or the like) with respect to the surface of the polyethylene expanded product, in order to adhere the polyethylene expanded product to the polyurethane expanded product. In Patent Literature 2, in order to adhere the molded product to the different-material layer, it is necessary to heat, at a temperature of not less than 80% of the softening temperature of the molded product, the region on the surface of the molded product which region is to be in contact with the different-material layer. That is, in the techniques of Patent Literatures 1 and 2, it is necessary to further physically treat the surface of the obtained polyethylene expanded product or the molded product. Thus, the techniques of Patent Literatures 1 and 2 have room for further improvement, in terms of productivity. Therefore, the inventors of the present invention have made it an object to provide, with good productivity, a laminated expanded product including a polypropylene-based resin in-mold expanded product and polyurethane foam. Specifically, the inventors of the present invention conducted diligent studies in order to develop polypropylene-based resin extruded foamed particles from which a polypropylene-based resin in-mold expanded product having excellent adhesiveness with respect to polyurethane foam without a physical treatment of a surface of the polypropylene-based resin in-mold expanded product can be provided.

As a result of the diligent studies, the inventors of the present invention uniquely obtained the following findings (1) and (2), and completed the present invention. (1) Polypropylene-based resin extruded foamed particles which contain, in respective specific amounts, a branched polypropylene-based resin and an acid-modified polyolefin-based resin that has a specific weight average molecular weight surprisingly make it possible to provide a polypropylene-based resin in-mold expanded product having excellent adhesion strength with respect to polyurethane foam without a physical treatment of a surface of the polypropylene-based resin in-mold expanded product. (2) That is, the polypropylene-based resin extruded foamed particles make it possible to provide, with good productivity, a laminated expanded product including a polypropylene-based resin in-mold expanded product and polyurethane foam.

Note, in addition, that Japanese Patent Application Publication, Tokukai, No. 2011-099101 discloses a method for producing foamed particles by a pressure-release expansion method with use of an acid-modified polyolefin-based resin. However, the inventors of the present invention have newly found that the technique disclosed in Japanese Patent Application Publication, Tokukai, No. 2011-099101 has the following problems (1) and (2). (1) In a case where foamed particles are produced with use of an acid-modified polyolefin-based resin as in the technique disclosed in Japanese Patent Application Publication, Tokukai, No. 2011-099101, adhesion of resin particles occurs and, therefore, a dispersing agent needs to be used in a large amount. (2) A large amount of the dispersing agent remains on surfaces of the foamed particles obtained with use of a large amount of the dispersing agent, and (a) an in-mold expanded product obtained by in-mold expansion molding with use of the foamed particles has a low rate of fusion and, therefore, the in-mold expanded product itself is likely to break, so that (b) the in-mold expanded product tends to have poor adhesion strength with respect to polyurethane foam (because a breakage occurs not at an adhesion part between the in-mold expanded product and the polyurethane foam but at an interface between the foamed particles constituting the in-mold expanded product).

In contrast, the polypropylene-based resin extruded foamed particles in accordance with an embodiment of the present invention are obtained by an extrusion foaming method. Therefore, no dispersing agent is needed. That is, the polypropylene-based resin extruded foamed particles in accordance with an embodiment of the present invention have an advantage that no dispersing agent adheres to surfaces of the foamed particles. As a result, the polypropylene-based resin extruded foamed particles in accordance with an embodiment of the present invention also have an advantage of making it possible to provide a polypropylene-based resin in-mold expanded product having excellent fusibility and excellent adhesion strength with respect to polyurethane foam.

[2. Polypropylene-based resin extruded foamed particles]

The polypropylene-based resin extruded foamed particles in accordance with an embodiment of the present invention are configured such that a base resin of the polypropylene-based resin extruded foamed particles contains a polypropylene-based resin having a branched structure (A) in an amount of 70.0% by weight to 97.5% by weight and an acid-modified polyolefin-based resin (B) having a weight average molecular weight of 10,000 to 100,000 in an amount of 2.5% by weight to 30.0% by weight, in a case where a total of the branched polypropylene-based resin (A) and the acid-modified polyolefin-based resin (B) is regarded as 100% by weight.

Since the polypropylene-based resin extruded foamed particles in accordance with an embodiment of the present invention have the above-described configuration, the polypropylene-based resin extruded foamed particles have an advantage of making it possible to provide, with good productivity, a laminated expanded product including a polypropylene-based resin in-mold expanded product and polyurethane foam. Specifically, since the polypropylene-based resin extruded foamed particles in accordance with an embodiment of the present invention have the above-described configuration, the polypropylene-based resin extruded foamed particles make it possible to provide a polypropylene-based resin in-mold expanded product having excellent adhesion strength with respect to polyurethane foam without a physical treatment of a surface of the polypropylene-based resin in-mold expanded product. Moreover, the polypropylene-based resin extruded foamed particles in accordance with an embodiment of the present invention can have a configuration such that surfaces thereof do not contain a dispersing agent (for example, tricalcium phosphate, kaolin, or the like). Note, however, that the dispersing agent can unintentionally adhere to the polypropylene-based resin extruded foamed particles in accordance with an embodiment of the present invention. Therefore, the polypropylene-based resin extruded foamed particles in accordance with an embodiment of the present invention can have a configuration such that the surfaces thereof substantially do not contain the dispersing agent. The expression "the surfaces thereof substantially do not contain the dispersing agent" is intended to mean that the amount of the dispersing agent adhering to the surfaces is not more than 100 ppm. In other words, the surfaces of the polypropylene-based resin extruded foamed particles in accordance with an embodiment of the present invention do not contain the dispersing agent or contain the dispersing agent in an amount of more than 0 ppm and not more than 100 ppm. Example of the dispersing agent include tricalcium phosphate, calcium carbonate, trimagnesium phosphate, barium sulfate, kaolin, and talc.

It is possible to form the polypropylene-based resin extruded foamed particles in accordance with an embodiment of the present invention into a polypropylene-based resin in-mold expanded product, by in-mold expansion molding of the polypropylene-based resin extruded foamed particles. It is also possible to obtain a laminated expanded product by laminating the polypropylene-based resin in-mold expanded product and polyurethane foam. In the present specification, a "polypropylene-based resin having a branched structure" may be referred to as a "branched polypropylene-based resin", the "polypropylene-based resin extruded foamed particles" may be referred to as "extruded foamed particles", the "polypropylene-based resin extruded foamed particles in accordance with an embodiment of the present invention" may be referred to as "present extruded foamed particles", and the "polypropylene-based resin in-mold expanded product" may be referred to as an "in-mold expanded product".

(2-1. Base resin)

The base resin in accordance with an embodiment of the present invention contains the polypropylene-based resin having a branched structure (A) and the acid-modified polyolefin-based resin (B) having a weight average molecular weight of 10,000 to 100,000. The base resin can further contain an additive such as a cell nucleating agent, as desired. It can be said that the base resin is a resin component which substantially constitutes the extruded foamed particles.

In the present specification, the "polypropylene-based resin having a branched structure (A)" is intended to mean: (a) a polypropylene-based resin in which molecules of a polypropylene-based resin to which a branched structure is not introduced are partially intermolecularly crosslinked with each other and (b) a polypropylene-based resin in which, as a branched chain, a conjugated diene compound or the like other than (poly)propylene is introduced to a polypropylene-based resin to which a branched structure is not introduced. Note, here, that a part of the branched polypropylene-based resin (A) which part is other than a crosslinked part may be referred to as a "main chain". Note also that the "polypropylene-based resin to which a branched structure is not introduced", that is, a raw material of the branched polypropylene-based resin (A) may be referred to as "linear polypropylene-based resin".

(Main chain)

In the present specification, the polypropylene-based resin is intended to mean a resin which includes a propylene monomer-derived structural unit in a proportion of not less than 50 mol% with respect to 100 mol% of all structural units included in the resin. Therefore, the main chain of the branched polypropylene-based resin (A) includes the propylene monomer-derived structural unit in a proportion of not less than 50 mol% with respect to 100 mol% of all structural units included in the main chain. In the present specification, the "propylene monomer-derived structural unit" may be referred to as a "propylene unit".

The main chain may be (a) a homopolymer of propylene, (b) a block or random copolymer of propylene and a monomer other than propylene, or (c) a mixture of at least two of these.

The main chain may include, in addition to the propylene unit, a structural unit derived from a monomer other than a propylene monomer, in such a manner as to include the structural unit in an amount of one or more units or as to include one or more types of such structural units. The "monomer other than a propylene monomer" used to produce the main chain may be referred to as a "comonomer". The "structural unit derived from a monomer other than a propylene monomer" included in the main chain may be referred to as a "comonomer unit".

Examples of the comonomer include the following monomers: (a) α-olefins having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; (b) cyclic olefins such as cyclopentene, norbornene, and tetracyclo[6,2,11,8,13,6]-4-dodecene; (c) dienes such as 5-methylene-2-norbornene, 5-ethylidene-2-norbornene, 1,4-hexadiene, methyl-1,4-hexadiene, and 7-methyl-1,6-octadiene; and (d) vinyl-based monomers such as vinyl chloride, vinylidene chloride, acrylonitrile, methacrylonitrile, vinyl acetate, acrylic acid, acrylic esters, methacrylic acid, methacrylic esters, maleic acid, maleic anhydride, styrene-based monomers, vinyltoluene, and divinylbenzene.

Examples of the acrylic esters include methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic esters include methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomers include styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The main chain includes, as the comonomer unit, preferably a structural unit derived from an α-olefin having 2 or 4 to 12 carbon atoms, more preferably a structural unit derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit derived from ethylene, 1-butene, isobutene, 1-pentene, 3-methyl-1-butene, 1-hexene, and/or 4-methyl-1-pentene, even more preferably a structural unit derived from ethylene, 1-butene, isobutene, and/or 1-pentene, and more particularly preferably a structural unit derived from ethylene and/or 1-butene. This configuration has the following advantages: (a) the branched polypropylene-based resin having a high melt tension and a low gel fraction is obtained; and (b) the obtained branched polypropylene-based resin makes it possible to provide the polypropylene-based resin extruded foamed particles having excellent moldability.

The main chain is preferably at least one selected from the group consisting of propylene homopolymers, polypropylene-based block copolymers, and polypropylene-based random copolymers, and more preferably a propylene homopolymer and/or a polypropylene-based random copolymer. This configuration has the following advantages: (a) the branched polypropylene-based resin having a high melt tension and a low gel fraction is obtained; and (b) the obtained branched polypropylene-based resin makes it possible to provide the polypropylene-based resin extruded foamed particles having excellent moldability.

The main chain includes the propylene unit in an amount of preferably not less than 90 mol%, more preferably not less than 93 mol%, even more preferably not less than 95 mol%, and particularly preferably not less than 97 mol%, with respect to 100 mol% of all structural units included in the main chain. This configuration has an advantage that the branched polypropylene-based resin having a high melt tension and a low gel fraction is obtained.

The melting point of the branched polypropylene-based resin (A) is not particularly limited. The melting point of the branched polypropylene-based resin (A) is, for example, preferably 125°C to 170°C, more preferably 130°C to 170°C, more preferably 135°C to 160°C, even more preferably 140°C to 155°C, and particularly preferably 145°C to 150°C. In a case where the melting point of the branched polypropylene-based resin (A) falls within the above-described range, there is an advantage that the extruded foamed particles have a low open cell ratio. In a case where (a) the melting point of the branched polypropylene-based resin (A) is not lower than 125°C, there are the following advantages: there is no possibility of a decrease in the dimensional stability of the in-mold expanded product; there is no possibility of the in-mold expanded product having insufficient heat resistance; and the in-mold expanded product tends to have high compressive strength. In a case where (b) the melting point of the branched polypropylene-based resin (A) is not higher than 170°C, it is possible to mold the extruded foamed particles at a relatively low steam pressure and, therefore, possible to mold the extruded foamed particles with use of a general-purpose molding machine for polypropylene-based resin foamed particles.

In the present specification, the melting point of the branched polypropylene-based resin (A) is a value determined by measurement carried out by differential scanning calorimetry (hereinafter referred to as a "DSC method"). A specific operational procedure is as follows: (1) the temperature of 5 mg to 6 mg of the branched polypropylene-based resin (A) is increased from 40°C to 220°C at a temperature increase rate of 10°C/min so that the branched polypropylene-based resin (A) is melted; (2) thereafter, the temperature of the melted branched polypropylene-based resin (A) is decreased from 220°C to 40°C at a temperature decrease rate of 10°C/min so that the branched polypropylene-based resin (A) is crystallized; and (3) then, the temperature of the crystallized branched polypropylene-based resin (A) is increased from 40°C to 220°C at a temperature increase rate of 10°C/min. A temperature corresponding to a peak (melting peak) in a DSC curve of the branched polypropylene-based resin (A) which DSC curve is obtained in the second temperature increase (that is, in (3)) can be determined as the melting point of the branched polypropylene-based resin (A). Note that, in a case where the DSC curve of the branched polypropylene-based resin (A) which DSC curve is obtained in the second temperature increase by the above-described method has a plurality of peaks (melting peaks), a temperature corresponding to a peak (melting peak) at which a melting heat quantity is the greatest is regarded as the melting point of the branched polypropylene-based resin (A). As a differential scanning calorimeter, DSC6200 type manufactured by Seiko Instruments Inc. can be used, for example.

The melt flow rate (MFR) of the branched polypropylene-based resin (A) is not particularly limited. The MFR of the branched polypropylene-based resin (A) is, for example, preferably 0.5 g/10 minutes to 20.0 g/10 minutes, more preferably 0.5 g/10 minutes to 15.0 g/10 minutes, even more preferably 1.0 g/10 minutes to 10.0 g/10 minutes, and still more preferably 1.5 g/10 minutes to 5.0 g/10 minutes, and particularly preferably 1.5 g/10 minutes to 3.0 g/10 minutes. In a case where the MFR of the branched polypropylene-based resin (A) falls within the above-described range, there are the following advantages: (a) the extruded foamed particles have a low open cell ratio; (b) the extruded foamed particles have excellent moldability; and (c) the extruded foamed particles make it possible to provide the in-mold expanded product having excellent resistance to breakage. In a case where (a) the MFR of the branched polypropylene-based resin (A) is not less than 0.5 g/10 minutes, there is an advantage that the extruded foamed particles obtained from the branched polypropylene-based resin (A) make it possible to provide the in-mold expanded product which is unlikely to be deformed and which has good surface properties (beautiful appearance). In a case where (b) the MFR of the branched polypropylene-based resin (A) is not more than 20.0 g/10 minutes, there is an advantage that a composition obtained from the branched polypropylene-based resin (A) has good foamability in extrusion foaming.

In the present specification, the MFR of the branched polypropylene-based resin (A) is a value determined by measurement carried out in accordance with ISO 1133 and under the conditions that a temperature is 230°C and a load is 2.16 kg.

The melt tension of the branched polypropylene-based resin (A) is not particularly limited. The melt tension of the branched polypropylene-based resin (A) is, for example, preferably 1.0 cN to 50.0 cN, more preferably 3.0 cN to 40.0 cN, more preferably 5.0 cN to 30.0 cN, even more preferably 7.0 cN to 20.0 cN, and particularly preferably 9.0 cN to 15.0 cN. In a case where the melt tension of the branched polypropylene-based resin (A) is not less than 1.0 cN, the composition, which contains the branched polypropylene-based resin (A) and the blowing agent, has sufficiently high tension and it is therefore possible to prevent cells in the obtained extruded foamed particles from breaking, when the composition is fully melted and foamed. As a result, there are (a) an advantage that the obtained extruded foamed particles have excellent moldability and (b) an advantage that the extruded foamed particles make it possible to provide the in-mold expanded product having excellent resistance to breakage. In a case where the melt tension of the branched polypropylene-based resin (A) is not more than 50.0 cN, a resin pressure (a force of a melted and kneaded product to press a pressure meter set in a production device) does not become excessively high and it is therefore possible to make a throughput rate relatively high, in an extrusion foaming step. As a result, there is an advantage that it is possible to obtain the extruded foamed particles with good productivity.

In the present specification, the melt tension of the branched polypropylene-based resin (A) is measured with use of Capilograph 1D (manufactured by TOYO SEIKI SEISAKU-SHO, LTD, Japan). The details of the measurement are the following (1) to (5): (1) a barrel that has a diameter of 9.55 mm and that has been heated to a test temperature (200°C) is filled with a sample resin (branched polypropylene-based resin) for measurement; (2) subsequently, the sample resin is heated for 10 minutes in the barrel, which has been heated to the test temperature (200°C); (3) subsequently, while the sample resin is discharged in the form of a strand through a capillary die (opening diameter: 1.0 mm, length: 10 mm) at a piston lowering speed (10 mm/min) which is kept constant, this strand-like resin is passed through a tension detecting pulley located 350 mm below the capillary die, and thereafter, take-up of the strand-like resin with use of a take-up roll is started; (4) after the drawing of the strand-like resin becomes stable, the speed at which the strand-like resin is taken up is increased from an initial speed of 1.0 m/min to a speed of 200 m/min at a constant rate in 4 minutes; (5) a load acting on the pulley, which is equipped with a load cell, at a point in time when the strand-like resin breaks is measured as the melt tension.

(Method for producing branched polypropylene-based resin (A))

The polypropylene-based resin having a branched structure (branched polypropylene-based resin) (A) can be obtained by introducing the branched structure into the linear polypropylene-based resin. A method for introducing the branched structure into the linear polypropylene-based resin is not particularly limited. Examples of the method include (a1) a method in which the linear polypropylene-based resin is irradiated with radial rays and (a2) a method in which a mixture that includes the linear polypropylene-based resin, a conjugated diene-based compound, and a radical polymerization initiator are melted and kneaded.

Examples of a specific method of the method (a1) include a method disclosed in Japanese Translation of PCT International Publication, Tokuhyo, No. 2002-542360.

The method (a2) is further described. In the method (a2), it is possible to obtain the branched polypropylene-based resin (A), for example, by sequentially carrying out the following (i) through (iv): (i) the mixture of the linear polypropylene-based resin, the conjugated diene-based compound, and the radical polymerization initiator is melt and kneaded in a device provided with a die; (ii) an obtained melted and kneaded product is extruded through the die; (iii) the extruded melted and kneaded product (also referred to as a strand) is cooled; and (iv) the strand is chopped simultaneously with or after cooling of the strand. Examples of a specific method of the method (a2) include a method disclosed in WO2020/004429.

In an embodiment of the present invention, the branched polypropylene-based resin (A) is preferably a branched polypropylene-based resin obtained by the method (a2), because: (i) it is possible to stably introduce the branched structure into the linear polypropylene-based resin, and the reproducibility of introduction of the branched structure is high; and/or (ii) there is no need for a complicated facility and it is possible to obtain the branched polypropylene-based resin with high productivity.

Examples of the conjugated diene compound include butadiene, isoprene, 1,3-heptadiene, 2,3-dimethylbutadiene, and 2,5-dimethyl-2,4-hexadiene. One of these conjugated diene compounds may be used solely, or at least two of these conjugated diene compounds may be used in combination. Among these conjugated diene compounds, butadiene and isoprene are particularly preferable, because butadiene and isoprene are (a) inexpensive and easy to handle and (b) likely to undergo a uniform reaction.

The radical polymerization initiator is an organic peroxide having ability to abstract hydrogen from the polypropylene-based resin and/or the conjugated diene compound. Examples of the radical polymerization initiator suitably used in an embodiment of the present invention include organic peroxides such as ketone peroxide, peroxy ketal, hydroperoxide, dialkyl peroxide, diacyl peroxide, peroxy dicarbonate, and a peroxy ester.

The organic peroxide particularly preferably has high hydrogen-abstracting ability. Suitable examples of the organic peroxide having high hydrogen-abstracting ability include: peroxy ketals such as 1,1-bis(t-butyl peroxy)3,3,5-trimethylcyclohexane, 1,1-bis(t-butyl peroxy)cyclohexane, n-butyl 4,4-bis(t-butyl peroxy) valerate, and 2,2-bis(t-butyl peroxy)butane; dialkyl peroxides such as dicumyl peroxide, 2,5-dimethyl-2,5-di(t-butyl peroxy)hexane, $\alpha,\alpha$'-bis(t-butyl peroxy-m-isopropyl)benzene, t-butyl cumyl peroxide, di-t-butyl peroxide, and 2,5-dimethyl-2,5-di(t-butyl peroxy)-3-hexyne; diacyl peroxides such as benzoyl peroxide; and peroxy esters such as t-butyl peroxy octoate, t-butyl peroxy isobutyrate, t-butyl peroxy laurate, t-butyl peroxy 3,5,5-trimethylhexanoate, t-butyl peroxy isopropylcarbonate, 2,5-dimethyl-2,5-di(benzoyl peroxy)hexane, t-butyl peroxy acetate, t-butyl peroxy benzoate, and di-t-butyl peroxy isophthalate. Among these organic peroxides, t-butyl peroxy isopropylcarbonate and/or t-butyl peroxy benzoate are/is preferable. One of these organic peroxides may be used solely, or at least two of these organic peroxides may be used in combination.

The amount of the radical polymerization initiator used is not particularly limited, but is preferably 0.01 parts by weight to 5.00 parts by weight, preferably 0.10 parts by weight to 3.00 parts by weight, more preferably 0.10 parts by weight to 2.50 parts by weight, and particularly preferably 0.10 parts by weight to 2.00 parts by weight, with respect to 100 parts by weight of the linear polypropylene-based resin.

(Acid-modified polyolefin-based resin (B))

It can be said that the acid-modified polyolefin-based resin (B) is a polyolefin-based resin to which an unsaturated carboxylic acid and/or a derivative thereof are/is introduced. Suitable examples of a method for introducing the unsaturated carboxylic acid and/or the derivative thereof to the polyolefin-based resin include (b1) a method in which, after the polyolefin-based resin and a radical polymerization initiator are reacted, an obtained reaction product is reacted with the unsaturated carboxylic acid and/or the derivative thereof to obtain the acid-modified polyolefin-based resin (B) and (b2) a method in which, after the polyolefin-based resin is pyrolyzed, the unsaturated carboxylic acid and/or the derivative thereof are/is introduced to an obtained reaction product. The method (b2) is preferable, because the unsaturated carboxylic acid and/or the derivative thereof are/is easily introduced to a terminal of a main chain. In other words, the acid-modified polyolefin-based resin (B) is preferably a resin obtained by a method in which, after the polyolefin-based resin is pyrolyzed, the unsaturated carboxylic acid and/or the derivative thereof are/is introduced to an obtained reaction product. It is also preferable that the acid-modified polyolefin-based resin (B) has no branching of polyolefin.

The weight average molecular weight of the acid-modified polyolefin-based resin (B) in accordance with an embodiment of the present invention is not particularly limited, but is preferably 15,000 to 65,000, more preferably 16,000 to 60,000, even more preferably 17,000 to 50,000, and particularly preferably 18,000 to 40,000. This configuration has an advantage that it is possible to provide a polypropylene-based resin in-mold expanded product having excellent adhesion strength with respect to polyurethane foam.

In the present specification, the weight average molecular weight of the acid-modified polyolefin-based resin (B) is a value calculated by a GPC method.

In the present specification, an acid is intended to mean the unsaturated carboxylic acid and/or the derivative thereof. Examples of the unsaturated carboxylic acids and the derivative thereof include fumaric acid, fumaric anhydride, maleic acid, maleic anhydride, itaconic acid, itaconic anhydride, citraconic acid, citraconic anhydride, aconitic acid, aconitic anhydride, methyl fumarate, ethyl fumarate, propyl fumarate, butyl fumarate, dimethyl fumarate, diethyl fumarate, dipropyl fumarate, dibutyl fumarate, methyl maleate, ethyl maleate, propyl maleate, butyl maleate, dimethyl maleate, diethyl maleate, dipropyl maleate, and dibutyl maleate.

In an embodiment of the present invention, the unsaturated carboxylic acid and the derivative thereof are more preferably itaconic anhydride and maleic anhydride, and more preferable maleic anhydride. That is, the acid-modified polyolefin-based resin (B) is preferably a resin obtained by introducing itaconic anhydride and/or maleic anhydride to the polyolefin-based resin, and more preferably a resin obtained by introducing maleic anhydride to the polyolefin-based resin. It can be said that the acid-modified polyolefin-based resin (B) preferably includes a structural unit derived from itaconic anhydride and/or a structural unit derived from maleic anhydride, and more preferably includes a structural unit derived from maleic anhydride. These configurations have an advantage that it is possible to provide, at low costs, a polypropylene-based resin in-mold expanded product having excellent adhesion strength with respect to polyurethane foam.

In the present specification, a resin obtained by introducing "Z" as the unsaturated carboxylic acid and the derivative thereof to the polyolefin-based resin (in other words, an acid-modified polyolefin-based resin including a structural unit derived from "Z" as the unsaturated carboxylic acid and the derivative thereof) may be referred to as a "Z-modified polyolefin-based resin".

In the present specification, an acid value is measured in accordance with JIS K 0070, and is intended to mean the amount (mg) of potassium hydroxide required to neutralize a free acid present in 1 g of the acid-modified polyolefin-based resin. The acid value is one of numerical values which are indicators of modification of an acid. The acid value of the acid-modified polyolefin-based resin (B) is preferably 1.0 mg/KOH to 200.0 mg/KOH, more preferably 3.0 mg/KOH to 150.0 mg/KOH, even more preferably 5.0 mg/KOH to 100.0 mg/KOH, and particularly preferably 10.0 mg/KOH to 80.0 mg/KOH. This configuration has an advantage that it is possible to provide an in-mold expanded product which has excellent adhesiveness with respect to polyurethane foam.

In a case where the total of the branched polypropylene-based resin (A) and the acid-modified polyolefin-based resin (B) is regarded as 100% by weight, the base resin contains (i) the branched polypropylene-based resin (A) in an amount of 70.0% by weight to 97.5% by weight and the acid-modified polyolefin-based resin (B) in an amount of 2.5% by weight to 30.0% by weight, (ii) preferably the branched polypropylene-based resin (A) in an amount of 70.0% by weight to 97.0% by weight and the acid-modified polyolefin-based resin (B) in an amount of 3.0% by weight to 30.0% by weight, (iii) more preferably the branched polypropylene-based resin (A) in an amount of 75.0% by weight to 97.0% by weight and the acid-modified polyolefin-based resin (B) in an amount of 3.0% by weight to 25.0% by weight, (iv) more preferably the branched polypropylene-based resin (A) in an amount of 80.0% by weight to 97.0% by weight and the acid-modified polyolefin-based resin (B) in an amount of 3.0% by weight to 20.0% by weight, and (v) even more preferably the branched polypropylene-based resin (A) in an amount of 85.0% by weight to 95.0% by weight and the acid-modified polyolefin-based resin (B) in an amount of 5.0% by weight to 15.0% by weight. This configuration has an advantage that it is possible to provide a laminated expanded product with good productivity.

(Another resin or rubber)

The base resin may further contain rubber or a resin other than the branched polypropylene-based resin (A) and the acid-modified polyolefin-based resin (B) (the resin may be hereinafter referred to as "another resin"), provided that the effect of an embodiment of the present invention is not impaired. Examples of the another resin include (a) linear polypropylene-based resins such as an ethylene/propylene random copolymer, an ethylene/propylene block copolymer, and a propylene homopolymer, (b) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer, and (c) styrene-based resins such as polystyrene, a styrene/maleic anhydride copolymer, and a styrene/ethylene copolymer. Examples of the rubber include olefin-based rubbers such as ethylene/propylene rubber, ethylene/butene rubber, ethylene/hexene rubber, and ethylene/octene rubber.

The amount of the another resin contained in the base resin is, for example, preferably not more than 60 parts by weight, more preferably not more than 40 parts by weight, more preferably not more than 30 parts by weight, even more preferably not more than 20 parts by weight, and particularly preferably not more than 10 parts by weight, with respect to a total of 100 parts by weight of the branched polypropylene-based resin (A) and the acid-modified polyolefin-based resin (B). The lower limit of the amount of the another resin is not particularly limited, and may be, for example, 0 part by weight, with respect to a total of 100 parts by weight of the branched polypropylene-based resin (A) and the acid-modified polyolefin-based resin (B).

In a case where the base resin contains a linear polypropylene-based resin as the another resin, the base resin preferably contains, for example, the branched polypropylene-based resin (A) in an amount of 40.0% by weight to less than 70.0% by weight, the acid-modified polyolefin-based resin (B) in an amount of 2.5% by weight to 30.0% by weight, and the linear polypropylene-based resin in an amount of more than 0% by weight and less than 30.0% by weight, with respect to a total of 100% by weight of the branched polypropylene-based resin (A), the acid-modified polyolefin-based resin (B), and the linear polypropylene-based resin.

(Cell nucleating agent)

The base resin may contain a cell nucleating agent for the purpose of controlling the number and shapes of cells in the extruded foamed particles to be obtained. Examples of the cell nucleating agent can include a sodium bicarbonate-citric acid mixture, monosodium citrate, talc, and calcium carbonate. One of these cell nucleating agents may be used solely, or two or more of these cell nucleating agents may be used in combination.

The amount of the cell nucleating agent contained in the base resin is not particularly limited. The amount of the cell nucleating agent is, for example, preferably 0.01 parts by weight to 5.00 parts by weight, more preferably 0.01 parts by weight to 3.50 parts by weight, even more preferably 0.01 parts by weight to 1.00 part by weight, and particularly preferably 0.01 parts by weight to 0.50 parts by weight, with respect to a total of 100 parts by weight of the branched polypropylene-based resin (A) and the acid-modified polyolefin-based resin (B).

(Coloring agent)

The base resin may or may not contain a coloring agent. In a case where the base resin does not contain a coloring agent, it is possible to obtain the extruded foamed particles having a natural color (for example, a color derived from the base resin). In a case where the base resin contains a coloring agent, it is possible to obtain the extruded foamed particles having a desired color (that is, a color derived from the coloring agent). Examples of the coloring agent include perylene-based organic pigments, azo-based organic pigments, quinacridone-based organic pigments, phthalocyanine-based organic pigments, threne-based organic pigments, dioxazine-based organic pigments, isoindoline-based organic pigments, and carbon black. One of these coloring agents may be used solely, or two or more of these coloring agents may be used in combination. In a case where an in-mold expanded product is used in a member that can be seen by a person, it may be required that the in-mold expanded product be black, from the viewpoint of design or the like. Thus, as the coloring agent, carbon black is preferable. The amount of the coloring agent used, which is, in other words, the amount of the coloring agent contained in the base resin, is not particularly limited.

(Other components)

The base resin may further contain, as necessary, any other component(s) which is (a) a stabilizer such as an antioxidant, a metal deactivator, a phosphorous processing stabilizer, an ultraviolet absorber, an ultraviolet stabilizer, a fluorescent brightening agent, metallic soap, and/or an antacid adsorbent and/or (b) an additive such as a crosslinking agent, a chain transfer agent, a lubricant, a plasticizer, a filler, a reinforcer, a flame retardant, and/or an antistatic agent. One of these components may be used solely, or two or more of these components may be used in combination.

The types and amounts of the branched polypropylene-based resin (A), the acid-modified polyolefin-based resin (B), the another resin or rubber, the cell nucleating agent, the coloring agent, and the any other component(s), each of which is contained in the base resin contained in the extruded foamed particles or in an in-mold expanded product obtained from the extruded foamed particles, that is, the base resin substantially constituting the extruded foamed particles or the in-mold expanded product, do not substantially change, even by an operation of melting the extruded foamed particles or the in-mold expanded product under reduced pressure to return the extruded foamed particles or the in-mold expanded product to a resin lump. In the present specification, obtaining a resin lump by melting, under reduced pressure, the extruded foamed particles or an in-mold expanded product obtained from the extruded foamed particles may be referred to as "reversion-to-resin", and the resin lump obtained by the reversion-to-resin may be referred to as a "reversion resin". Note also that "the branched polypropylene-based resin (A), the acid-modified polyolefin-based resin (B), the another resin or rubber, the cell nucleating agent, the coloring agent, and the any other component(s)" may be referred to as "the branched polypropylene-based resin (A), the acid-modified polyolefin-based resin (B), etc." In the present specification, the types and amounts of the branched polypropylene-based resin (A), the acid-modified polyolefin-based resin (B), etc. contained in the reversion resin can be regarded as the types and amounts of the branched polypropylene-based resin (A), the acid-modified polyolefin-based resin (B), etc. contained in the base resin. The types and amounts of the branched polypropylene-based resin (A), the acid-modified polyolefin-based resin (B), etc. contained in the reversion resin can be confirmed by analyzing the reversion resin by any known method.

Examples of a specific method for the reversion-to-resin include, but are not particularly limited to, a method in which the following (c1) to (c5) are sequentially carried out: (c1) the extruded foamed particles or the in-mold expanded product are/is put in a dryer having a temperature adjusted to be 10°C higher than the melting point of the extruded foamed particles or the in-mold expanded product; (c2) subsequently, the pressure inside the dryer is reduced to -0.05 MPa (cage pressure) to -0.10 MPa (cage pressure) over 5 minutes to 10 minutes with use of a vacuum pump; (c3) thereafter, the extruded foamed particles or the in-mold expanded product are/is left to stand in the dryer for 30 minutes for preparation of a resin lump (reversion resin); (c4) subsequently, the pressure inside the dryer is returned to normal pressure; and (c5) thereafter, the resin lump is taken out of the dryer and cooled to room temperature.

(2-2. Polypropylene-based resin extruded foamed particles)

(Physical properties of extruded foamed particles)

The following description will discuss the physical properties of the present extruded foamed particles. Note that a method for producing the polypropylene-based resin extruded foamed particles will be described later in detail.

(DSC curve)

A DSC curve which is obtained by a DSC method from polypropylene-based resin foamed particles obtained by a pressure-release expansion method has two peaks (melting peaks). On the other hand, a DSC curve which is obtained from polypropylene-based resin extruded foamed particles obtained by an extrusion foaming method has one peak (melting peak). Therefore, a DSC curve of the present extruded foamed particles can have one peak (melting peak). It is possible to obtain the DSC curve of the extruded foamed particles by increasing the temperature of the polypropylene-based resin extruded foamed particles from 40°C to 220°C at a rate of 10°C/min by differential scanning calorimetry. Note that the DSC curve of the extruded foamed particles is a DSC curve obtained in the first temperature increase, not the DSC curve which is obtained in the second temperature increase and which is used to measure the melting point of the branched polypropylene-based resin (A). Therefore, it can be said that the DSC curve of the polypropylene-based resin extruded foamed particles, which DSC curve is obtained in the first temperature increase, can have one peak.

(Open cell ratio)

It is more preferable that the present extruded foamed particles have a lower open cell ratio. The open cell ratio of the present extruded foamed particles is preferably not more than 10.0%, more preferably not more than 8.0%, more preferably not more than 6.0%, more preferably not more than 5.0%, more preferably not more than 4.0%, more preferably not more than 3.0%, and particularly preferably not more than 2.0%. The lower limit of the open cell ratio of the present polypropylene-based resin extruded foamed particles is not particularly limited, and is, for example, not less than 0.0%. This configuration has the following advantages: (a) the cells of the extruded foamed particles hardly break and contract at the time of molding of the extruded foamed particles, and the extruded foamed particles thus have excellent moldability; and (b) an in-mold expanded product obtained with use of the extruded foamed particles exhibits, to a greater degree, characteristics such as the property of being formed in any shape, shock-absorbing properties, lightweight properties, compressive strength, and heat insulating properties. Furthermore, in a case where the open cell ratio of the present extruded foamed particles falls within the above-described range, the extruded foamed particles have an advantage of having excellent low pressure moldability and an advantage of making it possible to provide an in-mold expanded product having excellent compressive strength.

In the present specification, the open cell ratio of the polypropylene-based resin extruded foamed particles is a value determined by measurement carried out with use of an air comparison pycnometer [Model 1000, manufactured by Tokyo-Science Co., Ltd.] in accordance with the method described in PROCEDURE C of ASTM D2856-87. Specifically, the open cell ratio of the extruded foamed particles is calculated by carrying out the following (1) to (3) in order: (1) the volume Vc (cm$^3$) of the extruded foamed particles is measured with use of the air comparison pycnometer; (2) subsequently, the whole extruded foamed particles whose Vc has been measured are submerged in ethanol contained in a graduated cylinder; (3) thereafter, an apparent volume Va (cm$^3$) of the extruded foamed particles is determined from the amount of a rise of the position of the ethanol in the graduated cylinder; and (4) the open cell ratio of the extruded foamed particles is calculated by the following expression: open cell ratio (%) = ((Va-Vc)$\times$100)/Va. This method for measuring the volume Va is also referred to as a submersion method.

(Expansion rate)

The expansion rate of the present extruded foamed particles is not particularly limited, but is preferably not less than 2 times, more preferably not less than 3 times, and even more preferably not less than 5 times. The expansion rate of the present extruded foamed particles is preferably not more than 30 times, more preferably not more than 28 times, and even more preferably not more than 25 times. This configuration has an advantage that an in-mold expanded product obtained by molding has excellent physical properties, such as compressive strength, and is light in weight. A method for measuring the expansion rate of the extruded foamed particles is described in detail in Examples below.

(Molding range)

The extruded foamed particles have an advantage of having a wide molding range (for example, more than 0). In the present specification, it is intended that, as the molding range of the extruded foamed particles becomes wider, the extruded foamed particles have more excellent moldability. In the present specification, the "molding range of the extruded foamed particles" is intended to mean a range of a steam pressure (gage pressure) during in-mold expansion molding in which range it is possible to obtain an in-mold expanded product that satisfies the following when in-mold expansion molding of the extruded foamed particles is carried out: (x1) fusion of the extruded foamed particles is sufficient; (x2) a gap between the extruded foamed particles is sufficiently filled; (x3) the in-mold expanded product has a beautiful surface; (x4) the in-mold expanded product does not have a melting surface; and (x5) the in-mold expanded product does not shrink and the shape of a mold used for in-mold expansion molding is transferred to the in-mold expanded product. In the present specification, in a case where the range of the steam pressure (gage pressure) which is a steam pressure during in-mold expansion molding and which makes it possible to obtain an in-mold expanded product that satisfies the above-described (x1) to (x5) is P1 to P2, "P1 to P2" is defined as a "moldable range of the extruded foamed particles", and a "value" obtained by P2-P1 is defined as a "molding range of the extruded foamed particles". Note that criteria for the respective items (x1) to (x5) in measurement of the molding range are described in detail in Examples below.

The molding range of the present extruded foamed particles is not particularly limited. It is preferable that the present extruded foamed particles have a wider molding range. The molding range of the present extruded foamed particles is more preferably not less than 0.02 MPa, more preferably not less than 0.03 MPa, even more preferably not less than 0.04 MPa, still more preferably not less than 0.05 MPa, and particularly preferably not less than 0.06 MPa.

[3. Method for producing polypropylene-based resin extruded foamed particles]

A method for producing the present extruded foamed particles is not particularly limited, and a known extrusion foaming method can be employed. Examples of an aspect of the method for producing the present extruded foamed particles include the following aspect: a method for producing the polypropylene-based resin extruded foamed particles, including: a first step of melting and kneading, in a production device, (a) the branched polypropylene-based resin (A), (b) the acid-modified polyolefin-based resin (B), (c) (c-1) the another resin or rubber, (c-2) the cell nucleating agent, (c-3) the coloring agent, and/or (c-4) the any other component(s), and (d) the blowing agent, the (c) being optional; and a second step of discharging, through a die, a melted and kneaded product obtained in the first step to a region which has a pressure lower than the internal pressure of the production device.

Examples of a particularly preferable aspect of the method for producing the present extruded foamed particles (the aspect can be referred to as a method in accordance with an embodiment of the present invention for producing the polypropylene-based resin extruded foamed particles) include the following aspect:

a method for producing polypropylene-based resin extruded foamed particles, including: a first step of melting and kneading, in a production device, a blowing agent and a resin composition which contains a branched polypropylene-based resin (A) and an acid-modified polyolefin-based resin (B) that has a weight average molecular weight of 10,000 to 100,000; and a second step of discharging, through a die, a melted and kneaded product obtained in the first step to a region which has a pressure lower than an internal pressure of the production device, wherein in a case where a total of the branched polypropylene-based resin (A) and the acid-modified polyolefin-based resin (B) which are contained in the resin composition is regarded as 100% by weight, the resin composition contains the polypropylene-based resin having a branched structure (A) in an amount of 70.0% by weight to 97.5% by weight and the acid-modified polyolefin-based resin (B) in an amount of 2.5% by weight to 30.0% by weight.

The following description will discuss each aspect (each step) relating to the method in accordance with an embodiment of the present invention for producing the polypropylene-based resin extruded foamed particles. Note that the description in [2. Polypropylene-based resin extruded foamed particles] will be applied, as appropriate, except for the matters described in detail below.

(First step)

The first step will be described in detail. Specific examples of the first step include a step in which, in a production device, the resin composition containing (a) the branched polypropylene-based resin (A), (b) the acid-modified polyolefin-based resin (B), and optionally (c) (c-1) the another resin or rubber, (c-2) the cell nucleating agent, (c-3) the coloring agent, and/or (c-4) the any other component(s) is melted and the blowing agent is dissolved in the resin composition. It can be said that this melting and kneading step is a step of preparing the melted and kneaded product containing the resin composition and the blowing agent.

(Blowing agent)

The blowing agent used in the production method is not particularly limited, but preferably contains at least carbon dioxide. By using carbon dioxide, the production method has an advantage that production costs are low and an environmental load is low.

In the present production method, a blowing agent other than carbon dioxide may be used as the blowing agent. Examples of the blowing agent which can be used as the blowing agent include: (a) physical blowing agents (for example, (a-1) aliphatic hydrocarbons such as propane, normal butane, isobutane, normal pentane, isopentane, and hexane; (a-2) alicyclic hydrocarbons such as cyclopentane and cyclobutane; (a-3) ethers such as dimethyl ether, diethyl ether, and methyl ethyl ether; (a-4) alcohols such as methanol and ethanol; (a-5) inorganic gases such as air and nitrogen; and (a-6) water); and (b) chemical blowing agents that include pyrolytic blowing agents such as sodium bicarbonate, azodicarbonamide, and dinitrosopentamethylenetetramine.

From the viewpoint (advantage) of foamability during extrusion foaming and convenience of handling of the blowing agent, the blowing agent preferably contains one or more selected from the group consisting of carbon dioxide, butane (for example, normal butane and isobutane), and nitrogen, and is more preferably constituted by only one or more selected from this group.

The amount of the blowing agent used is not particularly limited, and may be adjusted, as appropriate, in accordance with the type of the blowing agent and/or the target expansion rate of the polypropylene-based resin extruded foamed particles. As an example, the amount of the blowing agent used may be 0.5 parts by weight to 7.0 parts by weight, 0.5 parts by weight to 6.0 parts by weight, 0.5 parts by weight to 5.0 parts by weight, 0.5 parts by weight to 4.0 parts by weight, and 0.5 parts by weight to 3.0 parts by weight, with respect to a total of 100.0 parts by weight of the branched polypropylene-based resin (A) and the acid-modified polyolefin-based resin (B).

In the first step, a stabilizer (for example, an antioxidant, a metal deactivator, a phosphorous processing stabilizer, an ultraviolet absorber, an ultraviolet stabilizer, a fluorescent brightening agent, metallic soap, and antacid adsorbent) and an additive (for example, a cell nucleating agent, an inorganic coloring agent, an organic coloring agent, a crosslinking agent, a chain transfer agent, a lubricant, a plasticizer, a filler, a reinforcer, a pigment, a dye, a flame retardant, a water absorbent, and antistatic agent) may be further used, as necessary.

The additive such as a coloring agent and/or a stabilizer may be blended (used) as a masterbatch. The masterbatch of the additive such as a coloring agent and/or a stabilizer can be obtained by mixing, at any ratio, the additive such as a coloring agent and/or a stabilizer with any resin (for example, polypropylene-based resin). The concentration of the additive, such as a coloring agent and/or a stabilizer, in the masterbatch is not particularly limited. The masterbatch may be, for example, a masterbatch containing the additive, such as a coloring agent and/or a stabilizer, in an amount of 5% by weight to 50% by weight with respect to 100% by weight of the masterbatch.

In the first step, the resin composition and the blowing agent may be mixed prior to being supplied to the production device or may be mixed in the production device. In other words, in the first step, the resin composition may be supplied to the production device or may be prepared (completed) in the production device. In the first step, (i) a method and order of mixing the resin composition and the blowing agent and any other component(s) which can be optionally used are not particularly limited or (ii) a method and order of supplying, to the production device, the resin composition and the blowing agent and any other component(s) which can be optionally used are not particularly limited.

Before the melted and kneaded product obtained in the first step is extruded into the low-pressure region, the melted and kneaded product may be cooled.

(Second step)

The second step is a step of extruding, through the die, the melted and kneaded product obtained in the first step to the region which has a pressure lower than the internal pressure of the production device and chopping the extruded melted and kneaded product. By the second step, the extruded foamed particles are obtained. Therefore, the second step can be referred to as a granulating step of granulating the polypropylene-based resin extruded foamed particles.

In the second step, the region to which the melted and kneaded product obtained in the first step is extruded is not particularly limited, provided that the region has a pressure lower than the internal pressure of the production device. For example, in the second step, the melted and kneaded product obtained in the first step may be extruded to a gas phase or may be extruded to a liquid phase.

The melted and kneaded product extruded to the region which has a pressure lower than the internal pressure of the production device in the second step starts to foam immediately. In the second step, the melted and kneaded product which is foaming may be chopped or the melted and kneaded product which has foamed may be chopped. In a case where the melted and kneaded product which is foaming is chopped, the chopped melted and kneaded product can complete the foaming in the region to which the melted and kneaded product is extruded.

Depending on the region to which the melted and kneaded product obtained in the first step is extruded and a method for chopping the extruded melted and kneaded product, the second step (granulating step) can be roughly classified into a cold cut method and a die face cut method. The cold cut method includes a method in which (i) the melted and kneaded product that is extruded through the die and that contains the blowing agent is foamed and (ii) a foamed product in the form of a strand is taken up while being cooled through a water tank and is then chopped (strand cut method). The die face cut method is a method in which the melted and kneaded product extruded through a hole of the die is cut with use of a cutter that rotates while being in contact with a surface of the die or while ensuring a small gap between the cutter and the surface of the die.

The die face cut method is further classified into the following three methods on the basis of a difference in cooling method: an underwater cut (hereinafter may be referred to as "UWC") method; a watering cut (hereinafter may be referred to as "WRC") method; and a hot cut (hereinafter may be referred to as "HC") method. The UWC method is a method in which (i) a chamber attached to an end of the die is filled with cooling water, having a pressure adjusted to a given pressure, such that the cooling water is in contact with a resin discharge surface of the die and (ii) the melted and kneaded product extruded through the hole of the die is cut in water. The WRC method is a method in which (i) a cooling drum that is connected to the die and that has an inner circumferential surface along which cooling water flows is disposed downstream of the die and (ii) the melted and kneaded product cut with use of the cutter in air is cooled by the cooling water while foaming or after having foamed. The HC method is a method in which the melted and kneaded product is cut with use of the cutter in air and the cut melted and kneaded product is cooled in air while foaming or after having foamed. The HC method also includes a mist cut method that further includes a step of spraying a mixed mist of water and air.

[(4. Polypropylene-based resin in-mold expanded product]

A polypropylene-based resin in-mold expanded product in accordance with an embodiment of the present invention is obtained by molding the polypropylene-based resin extruded foamed particles described in the section [2. Polypropylene-based resin extruded foamed particles] or the polypropylene-based resin extruded foamed particles obtained by the production method described in [3. Method for producing polypropylene-based resin extruded foamed particles]. Note that, in the present specification, the "polypropylene-based resin in-mold expanded product in accordance with an embodiment of the present invention" may be referred to as the "present in-mold expanded product".

Since the present in-mold expanded product has the above-described configuration, the present in-mold expanded product has an advantage of having excellent adhesion strength with respect to polyurethane foam. As a result, the present in-mold expanded product makes it possible to provide a laminated expanded product in which adhesion strength between the in-mold expanded product and polyurethane foam is excellent without the need for another member such as an insert material.

Note that the present in-mold expanded product can be particularly suitably used as a raw material (in-mold expanded product) of a laminated expanded product of the in-mold expanded product and polyurethane foam. The present in-mold expanded product can be particularly suitably used as an in-mold expanded product for integral molding with polyurethane foam. In other words, the present in-mold expanded product can be used for a laminated expanded product together with polyurethane foam.

A method for producing the present in-mold expanded product, that is, a method for molding the present extruded foamed particles, is not particularly limited. For example, a known in-mold expansion molding method in which a mold is used can be employed.

As a method for molding the polypropylene-based resin in-mold expanded product from the present extruded foamed particles, a method such as, for example, any of the following methods can be employed: (A) a method in which (i) the extruded foamed particles are pressurized with use of an inorganic gas so as to be impregnated with the inorganic gas and have a given internal pressure, (ii) a mold is filled with the extruded foamed particles, and (iii) the extruded foamed particles are heated by steam or the like so as to be fused together (for example, Japanese Patent Publication, Tokukoushou, No. 51-22951); (B) a method in which (i) the extruded foamed particles are compressed by gas pressure, (ii) a mold is filled with the extruded foamed particles, and (iii) the extruded foamed particles are heated by steam or the like so as to be fused together while compression recovery of the extruded foamed particles is utilized (for example, Japanese Patent Publication, Tokukoushou, No. 53-33996); and (C) a method in which (i) a mold whose gap (gap in the mold) is open is filled with the extruded foamed particles, (ii) the mold is closed, until the gap (gap in the mold) has a given width, so that the extruded foamed particles, with which the mold is filled, are compressed, and (iii) the extruded foamed particles are heated by steam or the like so as to be fused together. With such methods, it is possible to obtain the in-mold expanded product having high compressive strength at a low molding pressure. The present invention is, needless to say, not limited to these methods.

(Physical properties of polypropylene-based resin in-mold expanded product)

The following description will discuss the physical properties of the in-mold expanded product.

(Density)

The density of the present in-mold expanded product is not particularly limited. The density of the present in-mold expanded product is, for example, preferably 20 g/L to 300 g/L, more preferably 30 g/L to 200 g/L, and even more preferably 40 g/L to 160 g/L, and particularly preferably 50 g/L to 150 g/L. This configuration has an advantage that the in-mold expanded product easily satisfies physical properties (such as compressive strength) required as an automobile member.

In the present specification, the density of the polypropylene-based resin in-mold expanded product is a value obtained by measurement carried out in accordance with the following method. First, the weight W (g) of the in-mold expanded product is measured. Next, the length, width, and thickness of the in-mold expanded product are measured with use of a caliper, and the volume V (cm$^3$) of the in-mold expanded product is calculated. Note that, in a case where the in-mold expanded product has a complex shape, the volume V (cm$^3$) may be determined by a submersion method (a method in which the in-mold expanded product is submerged in a container filled with water, the weight of water that has spilt out of the container is calculated by conversion with (division by) the density of water at a temperature at a time of measurement, and an obtained value is regarded as the volume of the in-mold expanded product). The density (g/L) of the in-mold expanded product is calculated in accordance with the following expression:

$$\mathrm{Density\ (g/L)\ of\ in\text{-}mold\ expanded\ product} = W/V \times 1{,}000.$$

(Adhesion strength)

As has been described, the present in-mold expanded product has excellent adhesion strength with respect to polyurethane foam. It is more preferable that the present in-mold expanded product have higher adhesion strength with respect to polyurethane foam. For example, the adhesion strength is preferably not less than 60 kPa, more preferably not less than 65 kPa, more preferably not less than 70 kPa, more preferably not less than 75 kPa, more preferably not less than 80 kPa, more preferably not less than 100 kPa, even more preferably not less than 150 kPa, and particularly preferably not less than 200 kPa.

In the present specification, the adhesion strength of the in-mold expanded product with respect to polyurethane foam (in other words, the adhesion strength between the in-mold expanded product and polyurethane foam) is a value obtained by measurement carried out by a peel test that is carried out in accordance with JIS K 6850 (1999). Specifically, the adhesion strength is a value obtained by converting, into kPa, the unit of a value that is obtained by dividing the maximum stress (N) obtained in the peel test by the area (m$^2$) of an adhesion surface.

[5.Laminated expanded product]

A laminated expanded product in accordance with an embodiment of the present invention is obtained by laminating the polypropylene-based resin in-mold expanded product described in the section [3. Polypropylene-based resin in-mold expanded product] and polyurethane foam. It can be said that the laminated expanded product in accordance with an embodiment of the present invention includes the polypropylene-based resin in-mold expanded product described in the section [3. Polypropylene-based resin in-mold expanded product] and polyurethane foam.

Since the laminated expanded product in accordance with an embodiment of the present invention has the above-described configurations, the laminated expanded product has an advantage that the adhesion strength between the polypropylene-based resin in-mold expanded product and polyurethane foam is excellent.

Examples of a method for producing the laminated expanded product in accordance with an embodiment of the present invention include, but are not particularly limited to, (d1) a method in which the polypropylene-based resin in-mold expanded product and polyurethane foam are adhered and laminated by (i) putting the polypropylene-based resin in-mold expanded product in a mold having a given gap, (ii) introducing, into the gap, a liquid which is a raw material of the polyurethane foam, and (iii) foaming the liquid and (d2) a method in which a liquid which is a raw material of polyurethane foam is applied to the polypropylene-based resin in-mold expanded product and another polypropylene-based resin in-mold expanded product or the like is adhered to and laminated on a surface to which the liquid is applied. In the method (d2), obtained is the laminated expanded product obtained by laminating the polypropylene-based resin in-mold expanded product and the polyurethane foam in order of the polypropylene-based resin in-mold expanded product, the polyurethane foam, and the polypropylene-based resin in-mold expanded product.

[6. Applications]

Each of the extruded foamed particles in accordance with an embodiment of the present invention, the in-mold expanded product in accordance with an embodiment of the present invention, and the laminated expanded product in accordance with an embodiment of the present invention can be used for various applications such as automobile interior members, automobile bumper core materials, heat insulating materials, and shock-absorbing packing materials, The extruded foamed particles in accordance with an embodiment of the present invention make it possible to provide the in-mold expanded product having excellent adhesiveness with respect to polyurethane foam, and make it possible to provide, with good productivity, the laminated expanded product including the polypropylene-based resin in-mold expanded product and polyurethane foam. Therefore, it is possible to particularly suitably use each of the extruded foamed particles in accordance with an embodiment of the present invention, the in-mold expanded product in accordance with an embodiment of the present invention, and the laminated expanded product in accordance with an embodiment of the present invention for automobile interior members such as vehicle sheets and head rests.

An embodiment of the present invention may have a configuration as follows.

[X1] Polypropylene-based resin extruded foamed particles, wherein a base resin of the polypropylene-based resin extruded foamed particles contains a polypropylene-based resin having a branched structure (A) in an amount of 70% by weight to 97% by weight and an acid-modified polyolefin-based resin (B) having a weight average molecular weight of 10,000 to 100,000 in an amount of 3% by weight to 30% by weight, in a case where a total of the branched polypropylene-based resin (A) and the acid-modified polyolefin-based resin (B) is regarded as 100% by weight.

[X2] The polypropylene-based resin extruded foamed particles described in [X1], wherein the acid-modified polyolefin-based resin (B) has a weight average molecular weight of 15,000 to 65,000.

[X3] The polypropylene-based resin extruded foamed particles described in [X1] or [X2], wherein the acid-modified polyolefin-based resin (B) is a resin obtained by introducing a maleic anhydride into a polyolefin-based resin.

[X4] A polypropylene-based resin in-mold expanded product obtained by molding polypropylene-based resin extruded foamed particles described in any one of [X1] through [X3].

[X5] A laminated expanded product obtained by laminating a polypropylene-based resin in-mold expanded product described in [X4] and polyurethane foam.

An embodiment of the present invention may have a configuration as follows.

[Y1] Polypropylene-based resin extruded foamed particles, wherein a base resin of the polypropylene-based resin extruded foamed particles contains a polypropylene-based resin having a branched structure (A) in an amount of 70.0% by weight to 97.5% by weight and an acid-modified polyolefin-based resin (B) having a weight average molecular weight of 10,000 to 100,000 in an amount of 2.5% by weight to 30.0% by weight, in a case where a total of the branched polypropylene-based resin (A) and the acid-modified polyolefin-based resin (B) is regarded as 100% by weight.

[Y2] The polypropylene-based resin extruded foamed particles described in [Y1], wherein the acid-modified polyolefin-based resin (B) has a weight average molecular weight of 15,000 to 65,000.

[Y3] The polypropylene-based resin extruded foamed particles described in [Y1] or [Y2], wherein the acid-modified polyolefin-based resin (B) is a resin obtained by introducing a maleic anhydride into a polyolefin-based resin.

[Y4] The polypropylene-based resin extruded foamed particles described in any one of [Y1] through [Y3], wherein the branched polypropylene-based resin (A) has a melting point of 125°C to 170°C.

[Y5] The polypropylene-based resin extruded foamed particles described in any one of [Y1] through [Y4], wherein the branched polypropylene-based resin (A) has an MFR of 0.5 g/10 minutes to 20.0 g/10 minutes.

[Y6] The polypropylene-based resin extruded foamed particles described in any one of [Y1] through [Y5], wherein the branched polypropylene-based resin (A) has a melt tension of 1.0 cN to 50.0 cN.

[Y7] The polypropylene-based resin extruded foamed particles described in any one of [Y1] through [Y6], wherein the acid-modified polyolefin-based resin (B) has an acid value of 1.0 mg/KOH to 200.0 mg/KOH.

[Y8] The polypropylene-based resin extruded foamed particles described in any one of [Y1] through [Y7], wherein a DSC curve has one peak.

[Y9] The polypropylene-based resin extruded foamed particles described in any one of [Y1] through [Y8], wherein the polypropylene-based resin extruded foamed particles have an open cell ratio of not more than 10.0%.

[Y10] The polypropylene-based resin extruded foamed particles described in any one of [Y1] through [Y9], wherein surfaces of the polypropylene-based resin extruded foamed particles do not contain a dispersing agent or contain the dispersing agent in an amount of more than 0 ppm and not more than 100 ppm.

[Y11] The polypropylene-based resin extruded foamed particles described in any one of [Y1] through [Y10], wherein a main chain of the branched polypropylene-based resin (A) is one or more selected from the group consisting of a propylene homopolymer, a polypropylene-based block copolymer, and a polypropylene-based random copolymer.

[Y12] The polypropylene-based resin extruded foamed particles described in any one of [Y1] through [Y11], wherein the polypropylene-based resin extruded foamed particles have an expansion rate of 2 times to 30 times.

[Y13] A polypropylene-based resin in-mold expanded product obtained by molding polypropylene-based resin extruded foamed particles described in any one of [Y1] through [Y12].

[Y14] The polypropylene-based resin in-mold expanded product described in [Y13], wherein the polypropylene-based resin in-mold expanded product is used for a laminated expanded product together with polyurethane foam.

[Y15] The polypropylene-based resin in-mold expanded product described in [Y13] or [Y14], wherein adhesion strength of the polypropylene-based resin in-mold expanded product with respect to polyurethane foam is not less than 60 kPa.

[Y16] A laminated expanded product obtained by laminating a polypropylene-based resin in-mold expanded product described in any one of [Y13] through [Y15] and polyurethane foam.

[Y17] A method for producing polypropylene-based resin extruded foamed particles, including: a first step of melting and kneading, in a production device, a blowing agent and a resin composition which contains a branched polypropylene-based resin (A) and an acid-modified polyolefin-based resin (B) that has a weight average molecular weight of 10,000 to 100,000; and a second step of discharging, through a die, a melted and kneaded product obtained in the first step to a region which has a pressure lower than an internal pressure of the production device, wherein in a case where a total of the branched polypropylene-based resin (A) and the acid-modified polyolefin-based resin (B) which are contained in the resin composition is regarded as 100% by weight, the resin composition contains the polypropylene-based resin having a branched structure (A) in an amount of 70.0% by weight to 97.5% by weight and the acid-modified polyolefin-based resin (B) in an amount of 2.5% by weight to 30.0% by weight.

[Y18] The method described in [Y17], wherein the acid-modified polyolefin-based resin (B) has a weight average molecular weight of 15,000 to 65,000.

[Y19] The method described in [Y 17] or [Y 18], wherein the acid-modified polyolefin-based resin (B) is a resin obtained by introducing a maleic anhydride into a polyolefin-based resin.

[Y20] The method described in any one of [Y17] through [Y19], wherein the branched polypropylene-based resin (A) has a melting point of 125°C to 170°C.

[Y21] The method described in any one of [Y17] through [Y20], wherein the branched polypropylene-based resin (A) has an MFR of 0.5 g/ 10 minutes to 20.0 g/ 10 minutes.

[Y22] The method described in any one of [Y17] through [Y21], wherein the branched polypropylene-based resin (A) has a melt tension of 1.0 cN to 50.0 cN.

[Y23] The method described in any one of [Y17] through [Y22], wherein the acid-modified polyolefin-based resin (B) has an acid value of 1.0 mg/KOH to 200.0 mg/KOH.

[Y24] The method described in any one of [Y17] through [Y23], wherein a DSC curve has one peak.

[Y25] The method described in any one of [Y17] through [Y24], wherein the polypropylene-based resin extruded foamed particles have an open cell ratio of not more than 10.0%.

[Y26] The method described in any one of [Y17] through [Y25], wherein the blowing agent contains one or more selected from the group consisting of carbon dioxide, butane, and nitrogen.

Examples

The following description will discuss embodiments of the present invention in further detail with reference to Examples. Note, however, that the present invention is not limited only to Examples below.

(Test methods)

Test methods used to measure and evaluate various physical properties in Examples and Comparative Examples are as follows.

[Melting point of branched polypropylene-based resin]

The melting point of a branched polypropylene-based resin was determined by measurement carried out by differential scanning calorimetry with use of the branched polypropylene-based resin as a sample. As a differential scanning calorimeter, a differential scanning calorimeter of a DSC6200 type manufactured by Seiko Instruments Inc. was used. A specific operational procedure was as follows: (1) the temperature of 5 mg to 6 mg of the sample (branched polypropylene-based resin) was increased from 40°C to 220°C at a temperature increase rate of 10°C/min so that the sample was melted; (2) thereafter, the temperature of the melted sample was decreased from 220°C to 40°C at a temperature decrease rate of 10°C/min so that the sample was crystallized; and (3) thereafter, the temperature of the crystallized sample was further increased from 40°C to 220°C at a temperature increase rate of 10°C/min. A temperature corresponding to a peak (melting peak) in a DSC curve of the sample (branched polypropylene-based resin) which DSC curve was obtained in the second temperature increase (that is, in (3)) was regarded as the melting point of the sample (branched polypropylene-based resin). Note that the DSC curve obtained in the second temperature increase from the branched polypropylene-based resin used in Examples and Comparative Examples below had one peak (melting peak).

[MFR of branched polypropylene-based resin]

The MFR of the branched polypropylene-based resin was determined by measurement carried out with use of the branched polypropylene-based resin as a sample. The measurement was carried out in compliance with the conditions of Procedure B described in ISO 1133 (1997), with use of Melt Indexer S-01 (manufactured by TOYO SEIKI SEISAKU-SHO, LTD), and under the conditions that a temperature was 230°C and a load was 2.16 kg.

[Melt tension of branched polypropylene-based resin]

The melt tension of the branched polypropylene-based resin was measured with use of Capilograph 1D (manufactured by TOYO SEIKI SEISAKU-SHO, LTD, Japan). Specifically, the melt tension was measured as shown in the following (1) through (5): (1) a barrel that had a diameter of 9.55 mm and that had been heated to a test temperature (200°C) was filled with a sample resin (branched polypropylene-based resin) for measurement; (2) subsequently, the sample resin was heated for 10 minutes in the barrel, which had been heated to the test temperature (200°C); (3) subsequently, while the sample resin was discharged in the form of a strand through a capillary die (opening diameter: 1.0 mm, length: 10 mm) at a piston lowering speed (10 mm/minutes) which was kept constant, this strand-like resin was passed through a tension detecting pulley located 350 mm below the capillary die, and thereafter, take-up of the strand-like resin with use of a take-up roll was started; (4) after the drawing of the strand-like resin became stable, the speed at which the strand-like resin was taken up was increased from an initial speed of 1.0 m/minute to a speed of 200 m/minute at a constant rate in 4 minutes; (5) a load acting on the pulley, which was equipped with a load cell, at a point in time when the strand-like resin broke was measured as the melt tension.

[Weight average molecular weight of acid-modified polyolefin-based resin]

The weight average molecular weight of an acid-modified polyolefin-based resin (B) and the weight average molecular weights of an acid-modified polyethylene-based resin and an acid-modified polypropylene-based resin, each of which was another resin, were calculated by a GPC method.

[Expansion rate of extruded foamed particles]

The expansion rate of polypropylene-based resin extruded foamed particles was calculated by the following method: (1) the weight w (g) of the extruded foamed particles was measured; (2) subsequently, the extruded foamed particles used to measure the weight were submerged in ethanol contained in a graduated cylinder, and the volume v

($cm^3$) of the extruded foamed particles was measured on the basis of the amount of a rise of the position of the liquid surface in the graduated cylinder; (3) the weight w (g) was divided by the volume v ($cm^3$) so that the density $\rho_1$ (g/$cm^3$) of the extruded foamed particles was calculated; and (4) the density $\rho_2$ (g/$cm^3$) of a base resin of the extruded foamed particles was divided by the density $\rho_1$ of the extruded foamed particles ($\rho_2/\rho_1$), and an obtained value was regarded as the expansion rate (times). As the density $\rho_2$ of the base resin, a density of 0.9 g/$cm^3$ of a common polypropylene-based resin was employed.

[DSC curve of extruded foamed particles]

A DSC curve was obtained by increasing the temperature of the polypropylene-based resin extruded foamed particles from 40°C to 220°C at a rate of 10°C/min by differential scanning calorimetry.

[Bulk density]

The bulk density of the polypropylene-based resin extruded foamed particles or the polypropylene-based resin foamed particles was measured by the following method. First, the polypropylene-based resin foamed particles which had been dried were put in a bucket having a volume of approximately 10 L to the brim, and then the polypropylene-based resin foamed particles were leveled at a bucket surface. Next, the weight of the polypropylene-based resin foamed particles in the bucket was measured. The bulk density was calculated in accordance with the following expression:

Bulk density (g / L) = weight of polypropylene-based resin foamed particles (g) / volume of bucket (L).

[Open cell ratio]

The open cell ratio of the extruded foamed particles was determined by measurement carried out with use of an air comparison pycnometer [Model 1000, manufactured by Tokyo-Science Co., Ltd.] in accordance with the method described in PROCEDURE C of ASTM D2856-87. More specifically, the open cell ratio of the extruded foamed particles was calculated by carrying out the following (1) to (3) in order: (1) the volume Vc ($cm^3$) of the extruded foamed particles was measured with use of the air comparison pycnometer; (2) subsequently, the whole extruded foamed particles whose Vc had been measured were submerged in ethanol contained in a graduated cylinder; (3) thereafter, an apparent volume Va ($cm^3$) of the extruded foamed particles was determined from the amount of a rise of the position of the ethanol in the graduated cylinder; and (4) the open cell ratio of the extruded foamed particles was calculated by the following expression:

$$\text{Open cell ratio (\%)} = ((Va-Vc) \times 100)/Va.$$

[Moldable range and molding range]

First, a mold having a block shape (a molding space: 381 mm in length × 320 mm in width × variable thickness) was brought into a state in which the thickness of the molding space was 78 mm (gap-in-mold rate: 30%). Next, the molding space in the mold was filled with the polypropylene-based resin extruded foamed particles. Then, the mold was moved so that the thickness of the molding space in the mold became 60 mm, and thereby the molding space was compressed.
Subsequently, air in the mold was expelled by steam at 0.10 MPa (gage pressure). Thereafter, the polypropylene-based resin extruded foamed particles were heated for 10 seconds with use of steam at a steam pressure of 0.20 MPa to 0.36 MPa (gage pressure) and in-mold expansion molding of the polypropylene-based resin extruded foamed particles was carried out to obtain a polypropylene-based resin in-mold expanded product.
Here, the in-mold expansion molding was carried out while the steam pressure was changed at 0.02 MPa intervals. In so doing, a range of the steam pressure during the in-mold expansion molding, in which range it was possible to obtain a polypropylene-based resin in-mold expanded product which satisfied the following (x1) to (x5), was determined, and the range of the steam pressure thus obtained was defined as $P_1$ to $P_2$: (x1) fusion (rate of fusion) of the polypropylene-based resin extruded foamed particles was sufficient; (x2) a gap between the polypropylene-based resin extruded foamed particles was sufficiently filled; (x3) the polypropylene-based resin in-mold expanded product had a beautiful surface; (x4) the polypropylene-based resin in-mold expanded product did not have a melting surface; and (x5) the polypropylene-based resin in-mold expanded product did not shrink, and the shape of the mold used for in-mold expansion molding was transferred to the polypropylene-based resin in-mold expanded product.

Here, evaluation of the rate of fusion in (x1), evaluation of the gap between the particles in (x2), evaluation of the surface appearance in (x3), evaluation of the surface melting state in (x4), and evaluation of the rate of shrinkage in (x5) were carried out as below. Note that the evaluation of each of (x1) to (x5) was carried out with use of the polypropylene-based resin in-mold expanded product which had been obtained by the above-described method and which had been left to stand in a drying chamber at 75°C for not shorter than 16 hours so as to be dried and had been further left to stand at 23°C for not shorter than 24 hours.

(Evaluation of rate of fusion)

With use of a knife or the like, a cut of approximately 5 mm was made from a location approximately 100 mm away from a corner of the polypropylene-based resin in-mold expanded product to a location approximately 100 mm away from the opposite corner. A part which was surrounded by (i) a part in which the cut was made and (ii) a corner was hit with use of a hammer or the like so that the cut part broke. A break surface was visually observed, and the total number of extruded foamed particles which were present on the break surface and the number of extruded foamed particles which were present on the break surface and the insides of which broke were counted. A ratio (%) of the number of extruded foamed particles which were present on the break surface and the insides of which broke to the total number of extruded foamed particles which were present on the break surface was calculated. The in-mold expanded product which had a ratio of not less than 60% was evaluated as acceptable. The in-mold expanded product which had a ratio of less than 60% was evaluated as unacceptable.

(Evaluation of inter-particle gap)

In areas which respectively included the centers of both surfaces each having the above length and width (i.e., surfaces perpendicular to a thickness direction) out of surfaces of the polypropylene-based resin in-mold expanded product and which each measured 100 mm in length and 100 mm in width, the extruded foamed particles were visually observed, and the number of gaps between the extruded foamed particles (i.e., parts dimpled with respect to the surfaces) was counted. The in-mold expanded product in which the number of gaps between the extruded foamed particles was not more than 20 was evaluated as acceptable. The in-mold expanded product in which the number of gaps between the extruded foamed particles was not less than 21 was evaluated as unacceptable.

(Evaluation of surface appearance)

In the longest piece out of edge parts of the polypropylene-based resin in-mold expanded product, the extruded foamed particles were visually observed and the number of gaps between the extruded foamed particles (parts dimpled with respect to a surface) was counted. The in-mold expanded product in which the number of gaps between the extruded foamed particles was not more than 3 was evaluated as acceptable. The in-mold expanded product in which the number of gaps between the extruded foamed particles was not less than 4 was evaluated as unacceptable.

(Evaluation of surface melting state)

The surface melting state of the polypropylene-based resin in-mold expanded product was evaluated with use of the polypropylene-based resin in-mold expanded product which had been obtained immediately after the molding and which had not been dried and left to stand. Specifically, in a case where (a) the polypropylene-based resin in-mold expanded product immediately after the molding could not be ejected from the mold because, for example, the in-mold expanded product adhered to the mold or (b) a part of a surface of the in-mold expanded product immediately after the molding, such as a part of a surface of the in-mold expanded product which part corresponded to a steam slit, remained on the mold even when the in-mold expanded product could be ejected from the mold, the in-mold expanded product was evaluated as unacceptable. In the other cases, the in-mold expanded product was evaluated as acceptable.

(Evaluation of rate of shrinkage)

The dimensions, that is, the length, width, and thickness of the polypropylene-based resin in-mold expanded product were measured. With use of obtained results, the rate of shrinkage (%) of each of the dimensions, that is, the length, width, and thickness of the polypropylene-based resin in-mold expanded product was evaluated by the following expression: {(Dimensions of molding space in mold) - (dimensions of in-mold expanded product)}×100/dimensions of molding space in mold. In a case where the rate of shrinkage of each of the length, width, and thickness was not more than 5%, the in-mold expanded product was evaluated as acceptable. In a case where the rate of shrinkage of at least any one of the length, width, and thickness was more than 5%, the in-mold expanded product was evaluated as unacceptable. Note that the dimensions of the molding space in the mold were 381 mm in length, 320 mm in width, and 60 mm in thickness.

The range "P1 to P2" of the steam pressure was defined as "moldable range of the extruded foamed particles", and a "value" obtained by P2-P1 was defined as "molding range of the extruded foamed particles". The "moldable range of the extruded foamed particles" was put in the columns "Moldable range" in Tables 1 and 2.

[Density of in-mold expanded product]

The density of the in-mold expanded product was measured in accordance with the following method. First, the weight W (g) of the in-mold expanded product was measured. Next, the length, width, and thickness of the in-mold expanded product were measured with use of a caliper, and the volume V (cm$^3$) of the in-mold expanded product was calculated. Note that, in a case where the in-mold expanded product has a complex shape, the volume V (cm$^3$) may be determined by a submersion method. The density (g/L) of the in-mold expanded product was calculated in accordance with following expression:

$$\mathrm{Density\ (g/L)\ of\ in\text{-}mold\ expanded\ product} = W/V \times 1{,}000.$$

[Adhesion strength between in-mold expanded product and polyurethane foam]

A peel test was carried out in accordance with JIS K 6850 (1999) so as to measure adhesion strength between the in-mold expanded product and polyurethane foam. A value obtained by converting, into kPa, the unit of a value that was obtained by dividing the maximum stress (N) obtained in the peel test by the area (m$^2$) of an adhesion surface was regarded as the adhesion strength.

Raw materials used in Examples and Comparative Examples are as follows.

<Branched polypropylene-based resin (A)>

· A-1: Branched polypropylene-based resin produced by Production Example 1 below.
· A-2: Branched polypropylene-based resin produced by Production Example 2 below.

<Linear polypropylene-based resin (X)>

· F-724NPC (manufactured by Prime Polymer Co., Ltd., polypropylene-based random copolymer, melting point: 150°C, MFR: 7 g/10 minutes)

<Acid-modified polyolefin-based resin (B)>

· B-1: UMEX 1010 (manufactured by Sanyo Chemical Industries, Ltd., maleic anhydride-modified polypropylene-based resin, weight average molecular weight: 30,000, acid value: 52 mg/KOH)
· B-2: Hi-WAX NP0555A (manufactured by Mitsui Chemicals, Inc., maleic anhydride-modified polypropylene-based resin, weight average molecular weight: 18,000, acid value: 61 mg/KOH)

<Others resins (Y)>

· Y-1: Hi-WAX 2203 A (manufactured by Mitsui Chemicals, Inc., maleic anhydride-modified polyethylene-based resin, weight average molecular weight: 2,700, acid value: 30.0 mg/KOH)
· Y-2: Hi-WAX 1105 A (manufactured by Mitsui Chemicals, Inc., maleic anhydride-modified polyethylene-based resin, weight average molecular weight: 1,500, acid value: 60.0 mg/KOH)
· Y-3: UMEX 100TS (manufactured by Sanyo Chemical Industries, Ltd., maleic anhydride-modified polypropylene-based resin, weight average molecular weight: 9,000, acid value: 3.5 mg/KOH)

<Additive>

· Talc: Talcan Powder (registered trademark) PK-S manufactured by Hayashi-Kasei Co., Ltd.

(Production Example 1) Synthesis of branched polypropylene-based resin (A-1)

F-724NPC (manufactured by Prime Polymer Co., Ltd., polypropylene-based random copolymer, melting point: 150°C, MFR: 7 g/10 minutes), which was a linear polypropylene-based resin, was supplied to a twin screw extruder. Next, 1.0 part by weight of t-butyl peroxy isopropylcarbonate (manufactured by NOF CORPORATION, PERBUTYL (registered trademark) I) with respect to 100 parts by weight of the linear polypropylene-based resin was supplied to the twin screw extruder as a radical polymerization initiator. After the linear polypropylene-based resin and the radical polymerization initiator were melted and kneaded, 0.45 parts by weight of an isoprene monomer (manufactured by KURARAY CO., LTD.) with respect to 100 parts by weight of the linear polypropylene-based resin was supplied to the twin screw extruder as a conjugated diene compound, and a resin mixture was prepared in the twin screw extruder. At a time when the isoprene monomer was supplied to the twin screw extruder, the amount of the resin mixture prepared per unit time in the twin screw extruder was 70 kg/h.

Next, the prepared resin mixture was further melted and kneaded in the twin screw extruder at a cylinder temperature of 200°C and a screw rotation speed of 230 rpm to obtain a branched polypropylene-based resin. The obtained branched polypropylene-based resin was discharged in the form of a strand from a die at a throughput rate of 70kg/h. The discharged branched polypropylene-based resin (strand) was (a) cooled with water, and then (b) chopped into pellets (cylindrical shape). The melting point, MFR, and melt tension of the obtained branched polypropylene-based resin (A-1) were measured by the above-described methods. As a result, the branched polypropylene-based resin (A-1) had a melting point of 147°C, an MFR of 2 g/10 minutes, and a melt tension of 10.8 cN.

(Production Example 2) Synthesis of branched polypropylene-based resin (A-2)

A branched polypropylene-based resin (A-2) was obtained by the same method as that in (Production Example 1), except that the amount of a radical polymerization initiator (t-butyl peroxy isopropylcarbonate) used was set to 1.4 parts by weight with respect to 100 parts by weight of a linear polypropylene-based resin (F-724NPC) and the amount of a conjugated diene compound (isoprene monomer) used was set to 0.60 parts by weight with respect to 100 parts by weight of the linear polypropylene-based resin (F-724NPC). The melting point, MFR, and melt tension of the obtained branched polypropylene-based resin (A-2) were measured by the above-described methods. As a result, the branched polypropylene-based resin (A-2) had a melting point of 146°C, an MFR of 2 g/ 10 minutes, and a melt tension of 11.3 cN.

(Example 1)

(Production of extruded foamed particles)

(First step)

As a production device for extruded foamed particles, a device in which a twin screw extruder that had a screw diameter φ of 15 mm, a melt cooler, a diverter valve, and a die were connected in series was used. Resins and an additive (cell nucleating agent) shown in Table 1 were blended in amounts shown in Table 1 to prepare a resin composition. Next, the resin composition was supplied to a twin screw extruder and melted and kneaded at a cylinder temperature of 200°C. A blowing agent (carbon dioxide) in an amount shown in Table 1 was further supplied through an injection part provided to the extruder with use of a metering pump, and an obtained melted and kneaded product was further melted and kneaded.

(Second step)

By passing the obtained melted and kneaded product through the melt cooler connected to an end of the twin screw extruder, the melted and kneaded product was cooled to 150°C to 160°C. Thereafter, the melted and kneaded product was extruded, through the die attached to an end of the melt cooler, into a region which had a pressure lower than the internal pressure of the production device (under atmospheric pressure and in the air) so that the melted and kneaded product was foamed. The melted and kneaded product immediately after passing through the die was chopped with use of a rotary cutter attached to an end of the die to obtain extruded foamed particles. As described above, a hot cut method was employed in the second step. The open cell ratio and bulk density of the obtained extruded foamed particles were measured by the above-described methods, and a moldable range was evaluated. Table 1 shows results of these measurements. Furthermore, a DSC curve of the obtained extruded foamed particles was obtained by the above-described method. As a result, the DSC curve had one peak.

(Production of in-mold expanded product)

With use of the obtained polypropylene-based resin extruded foamed particles, a polypropylene-based resin in-mold expanded product was produced by the following method. First, a mold having a block shape (a molding space: 381 mm in length × 320 mm in width × variable thickness) was brought into a state in which the thickness of the molding space was 78 mm (gap-in-mold rate: 30%). Next, the molding space in the mold was filled with the polypropylene-based resin extruded foamed particles. Then, the mold was moved so that the thickness of the molding space in the mold became 60 mm, and thereby the molding space was compressed. Subsequently, air in the mold was expelled by steam at 0.10 MPa (gage pressure). Thereafter, heating and molding were carried out for 10 seconds with use of steam at a steam pressure shown in a row "Moldable range" of Table 1 to obtain a polypropylene-based resin in-mold expanded product. The obtained polypropylene-based resin in-mold expanded product was evaluated as acceptable for all of the above-described (x1) to (x5).

The rate of fusion of the in-mold expanded product obtained with use of steam at a steam pressure of 0.26 MPa was evaluated by the method described in the section (Evaluation of rate of fusion). Table 1 shows a result.

(Production of laminated expanded product)

The in-mold expanded product obtained with use of steam at a steam pressure of 0.26 MPa was used to produce a laminated expanded product. Two test pieces each having a thickness of 5 mm (having a skin surface on one side) were cut out from the in-mold expanded product. A raw material liquid (manufactured by Henkel Japan Ltd., product name: Loctite, green foam) for forming polyurethane foam was applied to the skin surface of one test piece (referred to as a test piece A). Next, the skin surface of the other test piece (referred to as a test piece B) was set and fixed on the skin surface of the test piece A such that the skin surface of the test piece B was in contact with the applied raw material liquid for forming polyurethane foam and polyurethane foam to be obtained would have a thickness of 5 mm and a density of approximately 65 g/L. Next, the raw material liquid for forming polyurethane foam was foamed and solidified in an open system at 23°C for 48 hours. After the solidification, excess polyurethane foam was removed to obtain a laminated expanded product in which the dimensions of an adhesion surface were 25 mm × 12.5 mm. With regard to the obtained laminated expanded product, adhesion strength between the in-mold expanded product and the polyurethane foam was measured by the above-described method. Table 1 shows a result.

(Examples 2 to 8)

Polypropylene-based resin extruded foamed particles were prepared by the same method as in Example 1, except that resins and an additive shown in Table 1 were blended in amounts shown in Table 1. A polypropylene-based resin in-mold expanded product was prepared by the same method as that in Example 1, except that a heating steam pressure was set to a steam pressure shown in the row "Moldable range" of Table 1. Furthermore, a laminated expanded product was prepared by the same method as that in Example 1 with use of the in-mold expanded product obtained with use of steam at a steam pressure of 0.26 MPa. The obtained extruded foamed particles, in-mold expanded product, and laminated expanded product were evaluated variously. The rate of fusion of the in-mold expanded product obtained with use of steam at a steam pressure of 0.26 MPa was evaluated by the method described in the section (Evaluation of rate of fusion). Table 1 shows results of these measurements. Furthermore, a DSC curve of the extruded foamed particles obtained in each of Examples 2 to 8 was obtained by the above-described method. As a result, the DSC curve had one peak.

(Comparative Examples 1 to 9)

Polypropylene-based resin extruded foamed particles were obtained by the same method as in Example 1, except that resins and an additive shown in Table 2 were blended in amounts shown in Table 2. A polypropylene-based resin in-mold expanded product was prepared by the same method as that in Example 1, except that a heating steam pressure was set to a steam pressure shown in the row "Moldable range" of Table 2. Furthermore, a laminated expanded product was prepared by the same method as that in Example 1 with use of the in-mold expanded product obtained with use of steam at a steam pressure of 0.26 MPa. The obtained extruded foamed particles, in-mold expanded product, and laminated expanded product were evaluated variously. The rate of fusion of the in-mold expanded product obtained with use of steam at a steam pressure of 0.26 MPa was evaluated by the method described in the section (Evaluation of rate of fusion). Table 2 shows results of these measurements. Note that, although molding of an in-mold expanded product was attempted with use of the extruded foamed particles in Comparative Example 9, a moldable range in which an in-mold expanded product that satisfied the above-described criteria (x1) to (x5) could be provided was not present (shown as "NG" in Table 2). Namely, in the case of Comparison Example 9, it was not possible to produce an in-mold expanded product and a laminated expanded product.

[Table 1]

| | Example 1 | Eample 2 | Example 3 | Eample 4 | Example 5 | Example 6 | Example 7 | Eample 8 | Eample 9 |
|---|---|---|---|---|---|---|---|---|---|

| | | | | | Eample 1 | Eample 2 | Eample 3 | Eample 4 | Eample 5 | Eample 6 | Eample 7 | Eample 8 | Eample 9 |
|---|---|---|---|---|---|---|---|---|---|---|---|---|---|
| Extruded foamed particles | Composition | Branched polypropylene-based resin (A) | A-1 | Parts by weight | 97 | 95 | 90 | | | 95 | 95 | 95 | 95 |
| | | | A-2 | Parts by weight | | | | 80 | 70 | | | | |
| | | Acid-modified polyolefin-based resin (B) | B-1 | Parts by weight | 3 | 5 | 10 | 20 | 30 | 5 | 5 | | 5 |
| | | | B-2 | Parts by weight | | | | | | | | 5 | |
| | | Linear polypropylene-based resin (X) | - | Parts by weight | | | | | | | | | 10 |
| | | Another resin (Y) | Y-1 | Parts by weight | | | | | | | | | |
| | | | Y-2 | Parts by weight | | | | | | | | | |
| | | | Y-3 | Parts by weight | | | | | | | | | |
| | | Cell nucleating agent | Talc | Parts by weight | 0.2 | 0.2 | 0.2 | 0.2 | 0.2 | 0.2 | 0.2 | 0.2 | 0.2 |
| | | Blowing agent | Carbon dioxide | Parts by weight | 1.7 | 1.7 | 1.7 | 1.7 | 1.7 | 1.3 | 2.3 | 1.7 | 1.7 |
| | Physical properties | Expansion rate | | Times | 7.1 | 7.0 | 7.1 | 7.1 | 7.0 | 7.0 | 7.1 | 7.0 | 7.1 |
| | | Bulk density | | g/L | 70 | 70 | 70 | 70 | 70 | 100 | 50 | 70 | 70 |
| | | Open cell ratio | | % | 2.0 | 2.0 | 2.0 | 3.0 | 4.0 | 2.0 | 2.0 | 2.0 | 3.5 |
| | | Moldable range | | MPa | 0.24-0.30 | 0.24-0.30 | 0.24-0.30 | 0.22-0.28 | 0.20-0.26 | 0.24-0.30 | 0.24-0.30 | 0.24-0.30 | 0.24-0.30 |

(continued)

| | | | | Example 1 | Example 2 | Example 3 | Example 4 | Example 5 | Example 6 | Example 7 | Example 8 | Eample 9 |
|---|---|---|---|---|---|---|---|---|---|---|---|---|
| In-mold expanded product | Physical properties | Density | g/L | 100 | 100 | 100 | 100 | 100 | 145 | 70 | 100 | 100 |
| | | Rate of fusion | % | 90 | 90 | 90 | 90 | 95 | 90 | 90 | 90 | 90 |
| Laminated expanded product | | Adhesion strength | kPa | 62 | 78 | 103 | 182 | 287 | 77 | 82 | 77 | 70 |

[Table 2]

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|
| Extruded foamed particles | Composition | Branched polypropylene-based resin (A) | A-1 | Parts by weight | 100 | | 98 | 95 | 95 | 95 | 100 | 100 | |
| | | | A-2 | Parts by weight | | 100 | | | | | | | |
| | | Acid-modified polyolefin-based resin (B) | B-1 | Parts by weight | | | 2 | | | | | | |
| | | | B-2 | Parts by weight | | | | | | | | | |
| | | Linear polypropylene-based resin (X) | - | Parts by weight | | | | | | | | | 100 |
| | | Another resin (Y) | Y-1 | Parts by weight | | | | | 5 | | | | |
| | | | Y-2 | Parts by weight | | | | | | 5 | | | |
| | | | Y-3 | Parts by weight | | | | | | | 5 | | |
| | | Cell nucleating agent | Talc | Parts by weight | 0.2 | 0.2 | 0.2 | 0.2 | 0.2 | 0.2 | 0.2 | 0.2 | 0.2 |
| | | Blowing agent | Carbon dioxide | Parts by weight | 1.7 | 1.7 | 1.7 | 1.7 | 1.7 | 1.7 | 1.3 | 2.3 | 1.7 |

27

|  |  |  |  | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|
|  | Physical properties | Expansion rate | Times | 7.1 | 7.1 | 7.0 | 7.1 | 7.1 | 7.0 | 7.1 | 7.0 | 1.6 |
|  |  | Bulk density | g/L | 70 | 70 | 70 | 70 | 70 | 70 | 70 | 70 | 400 |
|  |  | Open cell ratio | % | 2.0 | 2.0 | 2.0 | 2.0 | 2.0 | 2.0 | 2.0 | 2.0 | 65.0 |
|  |  | Moldable range | MPa | 0.24-0.30 | 0.24-0.30 | 0.24-0.30 | 0.24-0.30 | 0.24-0.30 | 0.24-0.30 | 0.24-0.30 | 0.24-0.30 | NG |
| In-mold expanded product | Physical properties | Density | g/L | 100 | 100 | 100 | 100 | 100 | 100 | 145 | 70 | - |
|  |  | Rate of fusion | % | 90 | 90 | 90 | 90 | 90 | 90 | 90 | 90 | - |
| Laminated expanded product |  | Adhesion strength | kPa | 50 | 49 | 57 | 50 | 50 | 54 | 48 | 49 | - |

EP 4 410 877 A1

Polypropylene-based resin foamed particles were produced by a pressure-release expansion method (Reference Examples 1 to 4).

(Reference Examples 1 to 4)

[Preparation of polypropylene-based resin foamed particles by pressure-release expansion method]

With use of a super mixer, 97 parts by weight of a polyolefin-based resin (E228, manufactured by Prime Polymer Co., Ltd.), 3 parts by weight of a modified polyolefin-based resin (UMEX 1010, manufactured by Sanyo Chemical Industries, Ltd.), 0.05 parts by weight of glycerin, and 0.02 parts by weight of talc were blended. An obtained blended product was introduced into a 58-mm twin screw extruder, and then melted (200°C) and kneaded. Next, an obtained melted and kneaded product was passed through a die plate which had a plurality of holes each having a diameter of 2.2 mm, and thereby extruded in the form of strands. The extruded melted and kneaded product (strands) was passed through a water tank so as to be cooled, and then the strands were cut into cylindrical pellets, each having a given particle weight, with use of a pelletizer. Into an autoclave-type pressure-resistant vessel, introduced were 200 parts by weight of water, tricalcium phosphate (TAIHEI CHEMICAL INDUSTRIAL CO., LTD.) which was in an amount shown in Table 3 and which was a dispersing agent, sodium alkylsulfonate (LATEMUL PS, manufactured by Kao Corporation) which was in an amount shown in Table 3 and which was a surfactant, and 5 parts by weight of carbon dioxide, with respect to 100 parts by weight of the obtained pellets. Subsequently, while these raw materials in the pressure-resistant vessel were stirred, the temperature inside the pressure-resistant vessel was increased to 150.5°C (expansion temperature), and the inside of the pressure-resistant vessel was held at the expansion temperature for a given time. Thereafter, carbon dioxide was impregnated into the pressure-resistant vessel so that the pressure inside the pressure-resistant vessel was increased to 2.5 MPa (expansion pressure). The inside of the pressure-resistant vessel was maintained at the expansion temperature and the expansion pressure for 30 minutes. Thereafter, while the pressure inside the pressure-resistant vessel was maintained at the expansion pressure by impregnating carbon dioxide into the pressure-resistant vessel, a mixture (dispersion slurry) inside the pressure-resistant vessel was discharged under atmospheric pressure through an orifice plate which had a hole having a diameter of 4 mm to obtain ethylene-propylene random copolymer foamed particles. The obtained ethylene-propylene random copolymer foamed particles were washed with water, dried in an oven at 60°C, and subjected to evaluation and molding described below.

The dispersion stability of the polypropylene-based resin foamed particles in the production process (pressure-release expansion process) was evaluated by a method described below. Furthermore, with regard to the obtained polypropylene-based resin foamed particles, (a) an expansion rate and (b) the amount of the dispersing agent adhering to surfaces of the polypropylene-based resin foamed particles (adhering dispersing agent amount) were measured by respective methods described below. The bulk density of the obtained polypropylene-based resin foamed particles was evaluated by a method described in the section [Bulk density].

(Dispersion stability)

Good: In the production process (pressure-release expansion process), adhesion and aggregation of the resin particles were not observed in the mixture (dispersion slurry) stirred in the pressure-resistant vessel, and the resin particles could be foamed. Moreover, the obtained foamed particles were not fused together.
Satisfactory: In the production process (pressure-release expansion process), adhesion and aggregation of the resin particles were not observed in the mixture (dispersion slurry) stirred in the pressure-resistant vessel, and the resin particles could be foamed. However, some of the obtained foamed particles were fused together, and some of the obtained foamed particles had flaws on the surfaces thereof. Failure: In the production process (pressure-release expansion process), the resin particles in the pressure-resistant vessel were adhered and aggregated, and the resin particles could not be foamed.

(Expansion rate of foamed particles obtained by pressure-release expansion method)

The expansion rate of the foamed particles was measured by a method including the following (1) to (4): (1) the weight w (g) of the foamed particles was measured; (2) next, the foamed particles used to measure the weight were submerged in ethanol contained in a graduated cylinder, and the volume v ($cm^3$) of the foamed particles was measured on the basis of the amount of a rise of the position of a liquid surface in the graduated cylinder; (3) the weight w (g) was divided by the volume v ($cm^3$) to calculate the density $\rho_1$ ($g/cm^3$) of the foamed particles; and (4) the density $\rho_2$ ($g/cm^3$) of the resin particles used to produce the foamed particles was divided by the density $\rho_1$ of the foamed particles ($\rho_2/\rho_1$),

and an obtained value was regarded as the expansion rate of the foamed particles.

(Adhering dispersing agent amount)

The dispersing agent remaining on the surfaces of the obtained polypropylene-based resin foamed particles is referred to as an adhering dispersing agent. The amount of the adhering dispersing agent was calculated by an ash content measurement. The ash content of the pellets (resin particles) used for foaming was subtracted from the ash content of the foamed particles, and an obtained value was regarded as the adhering dispersing agent amount. Each of the ash content of the foamed particles and the ash content of the resin particles was measured by a method below. A sample (foamed particles or resin particles) was put in a pot whose weight WO (g) had been measured, and then a weight W1 (g) was measured. Subsequently, the pot containing the sample was burned at 750°C for 1 hour, and then left to stand in a desiccator for 1 hour. Thereafter, the weight W2 (g) of the pot was measured, and the ash content was calculated by an expression below.

$$\text{Ash content (ppm)} = (W2-W0) \times 1,000,000 / (W1-W0)$$

The polypropylene-based resin foamed particles obtained by the pressure-release expansion method were used to produce a polypropylene-based resin in-mold expanded product by the following method. First, a mold having a block shape (a molding space: 381 mm in length × 320 mm in width × variable thickness) was brought into a state in which the thickness of the molding space was 78 mm (gap-in-mold rate: 30%). Next, the molding space in the mold was filled with the polypropylene-based resin foamed particles. Then, the mold was moved so that the thickness of the molding space in the mold became 60 mm, and thereby the molding space was compressed. Subsequently, air in the mold was expelled by steam at 0.10 MPa (gage pressure). Thereafter, heating and molding were carried out for 10 seconds with use of steam at a steam pressure of 0.26 MPa to obtain a polypropylene-based resin in-mold expanded product.
The rate of fusion of the obtained polypropylene-based resin in-mold expanded product was evaluated by a method described in the section (Evaluation of rate of fusion).

[Table 3]

| | | | Reference Example 1 | Reference Example 2 | Reference Example 3 | Reference Example 4 |
|---|---|---|---|---|---|---|
| Additive at the time of production of foamed particles | Dispersing agent | Parts by weight | 2.0 | 1.5 | 1.2 | 1.0 |
| | Surfactant | Parts by weight | 0.10 | 0.075 | 0.06 | 0.05 |
| Foamed particles | Dispersion stability | - | Good | Good | Satisfactory | Failure |
| | Expansion rate | Times | 7.0 | 7.1 | 7.0 | - |
| | Bulk density | g/L | 70 | 70 | 70 | - |
| | Adhering dispersing agent amount | ppm | 4800 | 4300 | 2900 | - |
| In-mold expanded product | Rate of fusion | % | 5 | 5 | 10 | - |

Industrial Applicability

According to an embodiment of the present invention, it is possible to provide, with good productivity, a laminated expanded product including a polypropylene-based resin in-mold expanded product and polyurethane foam. Accordingly, an embodiment of the present invention can particularly suitably be used in the fields of automobile interior members such as vehicle sheets and head rests.

**Claims**

1. Polypropylene-based resin extruded foamed particles, wherein

   a base resin of the polypropylene-based resin extruded foamed particles contains
   a polypropylene-based resin having a branched structure (A) in an amount of 70.0% by weight to 97.5% by weight and
   an acid-modified polyolefin-based resin (B) having a weight average molecular weight of 10,000 to 100,000 in an amount of 2.5% by weight to 30.0% by weight,
   in a case where a total of the branched polypropylene-based resin (A) and the acid-modified polyolefin-based resin (B) is regarded as 100% by weight.

2. The polypropylene-based resin extruded foamed particles as set forth in claim 1, wherein the acid-modified polyolefin-based resin (B) has a weight average molecular weight of 15,000 to 65,000.

3. The polypropylene-based resin extruded foamed particles as set forth in claim 1 or 2, wherein the acid-modified polyolefin-based resin (B) is a resin obtained by introducing a maleic anhydride into a polyolefin-based resin.

4. The polypropylene-based resin extruded foamed particles as set forth in any one of claims 1 through 3, wherein the branched polypropylene-based resin (A) has a melting point of 125°C to 170°C.

5. The polypropylene-based resin extruded foamed particles as set forth in any one of claims 1 through 4, wherein the branched polypropylene-based resin (A) has an MFR of 0.5 g/10 minutes to 20.0 g/10 minutes.

6. The polypropylene-based resin extruded foamed particles as set forth in any one of claims 1 through 5, wherein the branched polypropylene-based resin (A) has a melt tension of 1.0 cN to 50.0 cN.

7. The polypropylene-based resin extruded foamed particles as set forth in any one of claims 1 through 6, wherein the acid-modified polyolefin-based resin (B) has an acid value of 1.0 mg/KOH to 200.0 mg/KOH.

8. The polypropylene-based resin extruded foamed particles as set forth in any one of claims 1 through 7, wherein a DSC curve obtained in the first temperature increase has one peak.

9. The polypropylene-based resin extruded foamed particles as set forth in any one of claims 1 through 8, wherein the polypropylene-based resin extruded foamed particles have an open cell ratio of not more than 10.0%.

10. A polypropylene-based resin in-mold expanded product obtained by molding polypropylene-based resin extruded foamed particles recited in any one of claims 1 through 9.

11. The polypropylene-based resin in-mold expanded product as set forth in claim 10, wherein the polypropylene-based resin in-mold expanded product is used for a laminated expanded product together with polyurethane foam.

12. A laminated expanded product obtained by laminating a polypropylene-based resin in-mold expanded product recited in claim 10 or 11 and polyurethane foam.

13. A method for producing polypropylene-based resin extruded foamed particles, comprising:

    a first step of melting and kneading, in a production device, a blowing agent and a resin composition which contains a branched polypropylene-based resin (A) and an acid-modified polyolefin-based resin (B) that has a weight average molecular weight of 10,000 to 100,000; and
    a second step of discharging, through a die, a melted and kneaded product obtained in the first step to a region which has a pressure lower than an internal pressure of the production device, wherein
    in a case where a total of the branched polypropylene-based resin (A) and the acid-modified polyolefin-based resin (B) which are contained in the resin composition is regarded as 100% by weight, the resin composition contains the polypropylene-based resin having a branched structure (A) in an amount of 70.0% by weight to 97.5% by weight and the acid-modified polyolefin-based resin (B) in an amount of 2.5% by weight to 30.0% by weight.

**14.** The method as set forth in claim 13, wherein the acid-modified polyolefin-based resin (B) has a weight average molecular weight of 15,000 to 65,000.

**15.** The method as set forth in claim 13 or 14, wherein the acid-modified polyolefin-based resin (B) is a resin obtained by introducing a maleic anhydride into a polyolefin-based resin.

## INTERNATIONAL SEARCH REPORT

| International application No. |
| --- |
| **PCT/JP2022/035573** |

| A. CLASSIFICATION OF SUBJECT MATTER |
| --- |
| ***C08J 9/16***(2006.01)i; ***B32B 5/32***(2006.01)i; ***B32B 27/32***(2006.01)i; ***B32B 27/40***(2006.01)i; ***C08L 23/10***(2006.01)i; ***C08L 23/26***(2006.01)i <br> FI: C08J9/16 CES; C08L23/10; C08L23/26; B32B5/32; B32B27/32; B32B27/40 |
| According to International Patent Classification (IPC) or to both national classification and IPC |

| B. FIELDS SEARCHED |
| --- |
| Minimum documentation searched (classification system followed by classification symbols) <br> C08J9/00-9/42; C08L1/00-101/14; B32B1/0043/00 |
| Documentation searched other than minimum documentation to the extent that such documents are included in the fields searched <br> Published examined utility model applications of Japan 1922-1996 <br> Published unexamined utility model applications of Japan 1971-2022 <br> Registered utility model specifications of Japan 1996-2022 <br> Published registered utility model applications of Japan 1994-2022 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| A | WO 2021/172016 A1 (KANEKA CORPORATION) 02 September 2021 (2021-09-02) <br> entire text, all drawings | 1-15 |
| A | WO 2021/100645 A1 (KANEKA CORPORATION) 27 May 2021 (2021-05-27) <br> entire text, all drawings | 1-15 |
| A | JP 9-249763 A (SEKISUI PLASTICS CO LTD) 22 September 1997 (1997-09-22) <br> entire text, all drawings | 1-15 |
| A | JP 2015-113403 A (JSP CORPORATION) 22 June 2015 (2015-06-22) <br> entire text, all drawings | 1-15 |
| A | JP 2008-512502 A (JSP CORPORATION) 24 April 2008 (2008-04-24) <br> entire text, all drawings | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 November 2022** | **22 November 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2022/035573**

| Patent document cited in search report | | | Publication date (day/month/year) | Patent family member(s) | | | Publication date (day/month/year) |
|---|---|---|---|---|---|---|---|
| WO | 2021/172016 | A1 | 02 September 2021 | (Family: none) | | | |
| WO | 2021/100645 | A1 | 27 May 2021 | CN | 114341237 | A | |
| JP | 9-249763 | A | 22 September 1997 | (Family: none) | | | |
| JP | 2015-113403 | A | 22 June 2015 | US | 2015/0158990 | A1 | |
| | | | | claims, examples, figures | | | |
| | | | | EP | 2883902 | A1 | |
| | | | | CN | 104710645 | A | |
| | | | | TW | 201527371 | A | |
| JP | 2008-512502 | A | 24 April 2008 | US | 2008/0108717 | A1 | |
| | | | | claims, examples, figures | | | |
| | | | | EP | 1794221 | A1 | |
| | | | | CN | 101061162 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1249312 A
- JP 2012171104 A
- JP 2011099101 A
- JP 2002542360 W
- WO 2020004429 A
- JP 51022951 A
- JP 53033996 A